# EUROPEAN PATENT SPECIFICATION

(11) **EP 4 074 810 B1**
(45) Date of publication and mention of the grant of the patent: **15.11.2023**
(21) Application number: 21168647.2
(22) Date of filing: 15.04.2021
(51) Int. Cl.: C10L 1/236, C08F 222/04, C08F 222/06, C10L 10/14

(54) **NEW COMPOSITIONS FOR REDUCING CRYSTALLIZATION OF PARAFFIN CRYSTALS IN FUELS**
NEUE ZUSAMMENSETZUNGEN ZUR VERMINDERUNG DER KRISTALLISATION VON PARAFFINKRISTALLEN IN KRAFTSTOFFEN
NOUVELLES COMPOSITIONS DE RÉDUCTION DE LA CRISTALLISATION DE CRISTAUX DE PARAFFINE DANS DES CARBURANTS

(43) Date of publication of application: 19.10.2022
(73) Proprietor: BASF SE, 67056 Ludwigshafen am Rhein (DE); BASF Antwerpen N.V., 2040 Antwerpen (BE)
(72) Inventor: Rebholz, Uwe, 67056 Ludwigshafen (DE); Steppan, Simon, 67056 Ludwigshafen (DE); Gajda, Aleksandra Martyna, 67056 Ludwigshafen (DE); Wijmamds, Kevin, 2040 Antwerpen (BE)
(74) Representative: BASF IP Association

(56) References cited:
- WO-A1-2017/202642
- US-A- 3 917 466
- US-A- 4 416 668

## Description

The present invention relates to new compositions and the use of certain of their components for reducing crystallization of paraffin crystals in fuels.

Middle distillate fuels of fossil origin, especially gas oils, diesel oils or light heating oils, which are obtained from mineral oil, have different contents of paraffins according to the origin of the crude oil. At low temperatures, there is precipitation of solid paraffins at the cloud point ("CP"). It is thought that, in the course of further cooling, the platelet-shaped n-paraffin crystals form a kind of "house of cards structure" and the middle distillate fuel ceases to flow even though its predominant portion is still liquid. The precipitated n-paraffins in the temperature range between cloud point and pour point ("PP") considerably impair the flowability of the middle distillate fuels; the paraffins block filters and cause irregular or completely interrupted fuel supply to the combustion units. Similar disruptions occur in the case of light heating oils.

It has long been known that suitable additives can modify the crystal growth of the n-paraffins in middle distillate fuels. Additives of good efficacy prevent middle distillate fuels from already solidifying at temperatures a few degrees Celsius below the temperature at which the first paraffin crystals crystallize out. Instead, fine, readily crystallizing, separate paraffin crystals are formed, which, even when the temperature is lowered further, pass through the filters in motor vehicles and heating systems, or at least form a filtercake which is permeable to the liquid portion of the middle distillates, so that disruption-free operation is assured. The efficacy of the flow improvers is typically expressed, in accordance with European standard EN 116, indirectly by measuring the cold filter plugging point ("CFPP"). Cold flow improvers or middle distillate flow improvers ("MDFls") of this kind which are used have long included, for example, ethylene-vinyl carboxylate copolymers such as ethylene-vinyl acetate copolymers ("EVA").

One disadvantage of these additives when used in middle distillate fuels is that the paraffin crystals modified in this way, because of their higher density compared to the liquid portion, have a tendency to settle out more and more at the base of the fuel container, for example the reservoir tank, in the course of storage of the middle distillate fuel. This results in formation of a homogeneous low-paraffin phase in the upper part of the vessel and a biphasic paraffin-rich layer at the base. Since the fuel is usually drawn off not very far above the base of the container both in motor vehicle tanks and in storage or supply tanks belonging to mineral oil dealers, there is the risk that the high concentration of solid paraffins will lead to blockages of filters and metering units. The further the storage temperature drops below the precipitation temperature of the paraffins, the greater this risk becomes, since the amount of paraffin precipitated increases with falling temperature. The additional use of paraffin dispersants or wax anti-settling additives ("WASAs") can reduce the problems outlined.

WO 16/083130 and WO 17/202642 describe copolymers of unsaturated dicarboxylic acid or derivatives thereof, α-olefins and optionally alkyl esters of acrylic acid or methacrylic acid as cold flow improvers and for reducing paraffin crystals in fuels.

Despite the efficiency of such copolymers in fuels there is still a demand for further improvement of the activity of such copolymers in fuels.

Antistatic agents are often admixed to fuels or hydrocarbon distillation liquids in refineries in order to increase the electric conductivity, e.g. against electrostatic charge or for detecting the level in distillation towers or tanks with sensor using electric conductivity.

Usually the electric conductivity of fuels is in the range of 3 to 5 pS/m respectively in the case of distillation liquids is adjusted to a range of 30 pS/m or higher using such antistatic agents.

Examples for antistatic agents are disclosed in WO 08/107371 . A use as cold flow improvers and wax anti settling improver is not disclosed.

The problem underlying the present invention was to further improve the activity of cold flow improvers in fuels.

The problem was solved by admixing at least one antistatic agent to the cold flow improver in the fuel.

Another object of the present invention is a composition for reducing the crystallization of paraffin crystals in fuels comprising
(I) a copolymer obtainable by copolymerization of
   (A) at least one unsaturated dicarboxylic acid or derivatives thereof, wherein the derivatives are selected from the group consisting of
      - anhydrides,
      - mono- or dialkyl esters,
      - mixed esters, and
      - mono- and diamides, and imides,
      of unsaturated dicarboxylic acids,
   (B) at least one α-olefin having from at least 6 up to and including 20 carbon atoms,
   (C) optionally at least one C₃- to C₂₀-alkyl ester of acrylic acid or methacrylic acid or a mixture of such alkyl esters and
   (D) optionally one or more further copolymerizable monomers other than monomers (A), (B) and (C),
   followed by the reaction with at least one dialkylamine (E), where the two alkyl radicals in the at least one dialkylamine (E) are independently alkyl radicals having at least 17 up to 30 carbon atoms
   and
(II) at least one antistatic agent, selected from the group consisting of
   (F) copolymers of sulfur dioxide with one or more linear or branched 1 -olefins having from 2 to 24 carbon atoms,
   (F1) at least one further component comprising one or more basic nitrogen atoms and having at least one relatively long-chain linear or branched hydrocarbon radical having at least four carbon atoms or an equivalent structural element which ensures the solubility of component (F) in the fuel, wherein component (F1) is a reaction product of oligoethyleneamines or oligoethyleneimines with olefin-maleic anhydride copolymers derivatized with amines or polyamines,
   (G) organic sulfonic acids which have a hydrocarbyl radical having from 6 to 40 carbon atoms, and
   (H) quaternary nitrogen components of the formula

      ⁺NR¹R²R³R⁴ A⁻

      in which
      A⁻ stands for an anion, preferably a carboxylate R⁵COO⁻ or a carbonate R⁵O-COO⁻,
         and
      R¹, R², R³, R⁴, and R⁵ independently of another are an organic residue with from 1 to 100 carbon atoms, substituted or unsubstituted, preferably unsubstituted, linear or branched alkyl, alkenyl or hydroxyalkyl residue with 1 to 100, more preferably 1 to 75, even more preferably 1 to 30, most preferably 1 to 25 and especially 1 to 20 carbon atoms,
      R⁵ additionally may be substituted or unsubstituted cycloalkyl or aryl residues bearing 5 to 20, preferably 5 to 12 carbon atoms,
      wherein the weight ratio of copolymer (I) and antistatic agent (II) is from 1 : 0.01 to 10, preferably from 1 : 0.02 to 5, more preferably from 1 : 0.05 to 3.

Another object of the present invention is the use of antistatic agents, selected from the group consisting of
(F) copolymers of sulfur dioxide with one or more linear or branched 1 -olefins having from 2 to 24 carbon atoms,
(F1) at least one further component comprising one or more basic nitrogen atoms and having at least one relatively long-chain linear or branched hydrocarbon radical having at least four carbon atoms or an equivalent structural element which ensures the solubility of component (F) in the fuel,
wherein component (F1) is a reaction product of oligoethyleneamines or oligoethyleneimines with olefin-maleic anhydride copolymers derivatized with amines or polyamines,
(G) organic sulfonic acids which have a hydrocarbyl radical having from 6 to 40 carbon atoms, and
(H) quaternary nitrogen components of the formula

   ⁺NR¹R²R³R⁴ A⁻

   in which
   A⁻ stands for an anion, preferably a carboxylate R⁵COO⁻ or a carbonate R⁵O-COO⁻,
      and
   R¹, R², R³, R⁴, and R⁵ independently of another are an organic residue with from 1 to 100 carbon atoms, substituted or unsubstituted, preferably unsubstituted, linear or branched alkyl, alkenyl or hydroxyalkyl residue with 1 to 100, more preferably 1 to 75, even more preferably 1 to 30, most preferably 1 to 25 and especially 1 to 20 carbon atoms,
   R⁵ additionally may be substituted or unsubstituted cycloalkyl or aryl residues bearing 5 to 20, preferably 5 to 12 carbon atoms,
   wherein the weight ratio of copolymer (I) and antistatic agent (II) is from 1 : 0.01 to 10, preferably from 1 : 0.02 to 5, more preferably from 1 : 0.05 to 3
   for reducing the crystallization of paraffin crystals in fuels and/or for improving the cold flow properties of fuels and/or for improving the filterability of fuel oils, optionally and preferably together with at least one wax anti-settling additive, more preferably together with at least one copolymer as described under (I).

Another object of the present invention is a fuel comprising the above-mentioned compositions.

The compositions according to the present invention comprise at least on copolymer (I) and at least one of the above-mentioned antistatic agents (II). Optionally the compositions according to the invention may comprise solvents and/or further additives typical for fuel additives.

Preferably the compositions according to the present invention comprise at least one solvent and at least one flow improver (see below).

### Copolymer (I)

Monomer (A) comprises at least one, preferably one to three, more preferably one or two and most preferably exactly one unsaturated dicarboxylic acid(s) or derivatives thereof.

Derivatives are understood to mean
- the anhydrides in question, in monomeric or else polymeric form,
- mono- or dialkyl esters, preferably mono- or di-C₁-C₄-alkyl esters, more preferably mono- or dimethyl esters or the corresponding mono- or diethyl esters,
- mixed esters, preferably mixed esters having different C₁-C₄-alkyl components, more preferably mixed methyl ethyl esters, and
- mono- and diamides, and also imides, obtainable by reaction of the unsaturated dicarboxylic acid with primary amines or secondary amines, preferably C₁-C₃₀-alkylamines or di-C₁-C₃₀-alkylamines.

The derivatives are preferably anhydrides in monomeric form or di-C₁-C₄-alkyl esters, more preferably anhydrides in monomeric form.

In a further preferred embodiment, the derivatives are di- or monoamides, preferably monoamides, obtainable by reaction of the unsaturated dicarboxylic acid with dialkylamines (E) wherein the alkyl radicals independently have at least 17 up to 30 carbon atoms.

In the context of this document, C₁-C₄-alkyl is understood to mean methyl, ethyl, iso-propyl, n-propyl, n-butyl, iso-butyl, sec-butyl and tert-butyl, preferably methyl and ethyl, more preferably methyl.

The unsaturated dicarboxylic acid comprises those dicarboxylic acids or derivatives thereof in which the two carboxyl groups are conjugated to the ethylenically unsaturated double bond.

Examples thereof are maleic acid, fumaric acid, 2-methylmaleic acid, 2,3-dimethylmaleic acid, 2-methylfumaric acid, 2,3-dimethylfumaric acid, methylenemalonic acid and tetrahydrophthalic acid, preferably maleic acid and fumaric acid and more preferably maleic acid, and derivatives thereof.

Monomer (A) is especially maleic anhydride.

Monomer (B) comprises at least one, preferably one to four, more preferably one to three, even more preferably one or two and especially exactly one α-olefin(s) having from at least 6 up to and including 20 carbon atoms. The α-olefins (B) preferably have at least 8, more preferably at least 10, carbon atoms. The α-olefins (B) preferably have up to and including 18, more preferably up to and including 16 and most preferably up to and including 14 carbon atoms.

If monomer (B) is a mixture of different olefins, the determination of the number of carbon atoms should be based on the statistical average of the numbers of carbon atoms in the olefins present in the mixture. Accordingly, a mixture of 50 mol% of C₂₂ olefin and 50 mol% of C₁₆ olefin has a statistical average of 19 carbon atoms.

In a preferred embodiment, however, essentially all the α-olefins present in the mixture have the above-specified number of carbon atoms, preferably at least 90 mol%, more preferably at least 95 mol% and most preferably at least 98 mol%.

The α-olefins may preferably be linear or branched, preferably linear, 1-alkenes.

Examples thereof are 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1- octa-decene, 1-nonadecene and 1-eicosene, of which preference is given to 1-decene, 1-dodecene, 1-tetradecene and 1-hexadecene and particular preference to 1-dodecene.

Optional monomer (C) is at least one, preferably one to four, more preferably one to three, even more preferably one or two and especially exactly one C₄- to C₂₀-alkyl ester(s) of acrylic acid or methacrylic acid, preferably of acrylic acid, or a mixture of such alkyl esters. The alkyl radical in each case may be straight-chain or branched.

Suitable C₃- to C₂₀-alkyl esters of acrylic acid or methacrylic acid, preferably of acrylic acid, for component (C) are preferably the esters of acrylic acid and methacrylic acid with C₃- to C₁₈-alkanols, preferably with C₄- to C₁₈-alkanols, more preferably with C₈- to C₁₆-alkanols, even more preferably C₁₀- to C₁₄-alkanols and especially C₁₂-alkanols, for example with n-propanol, isopropanol, n-butanol, sec-butanol, isobutanol, tert-butanol, n-pentanol, tert-pentanol, n-hexanol, n-heptanol, n-octanol, 2-ethylhexanol, n-nonanol, isononanol, n-decanol, 2-propylheptanol, n-undecanol, isoundecanol, n-dodecanol, n-tridecanol, isotridecanol, 3,3,5,5,7-pentamethyloctanol, n-tetradecanol, n-pentadecanol, n-hexadecanol, n-heptadecanol, isoheptadecanol, 3,3,5,5,7,7,9-heptamethyldecanol, n-octadecanol and n-eicosanol. Also conceivable are mixtures of C₁₇-alkanols, as described in WO 2009/124979.

In one embodiment, the alkanols are branched C₁₃- or C₁₇-alkanols or mixtures thereof having a mean degree of branching according to the iso index of 1.2 to 3.0, especially of 1.7 to 2.5.

Alkanols of this kind or mixtures thereof are obtainable by oligomerization of C₄ hydrocarbon streams, especially homogeneously or heterogeneously catalyzed oligomerization of technical grade C₄ streams composed of 10% to 90% by weight of butane, 10% to 90% by weight of linear butenes (butene-1, cis- and trans-butene-2) and 1% to 5% by weight of isobutene, for example of raffinate II. A heterogeneous catalyst typical for this purpose comprises nickel. The oligomerization is usually conducted at temperatures of 30 to 280°C and pressures of 10 to 300 bar. Oligomerization reactions of this kind are described, for example, in WO 99/25668. The oligomerization products are subsequently hydroformylated and hydrogenated and thus give rise to the alkanols or alkanol mixtures mentioned.

Component (C) is preferably n-decyl (meth)acrylate, 2-propylheptyl (meth)acrylate, n-undecyl (meth)acrylate, n-dodecyl (meth)acrylate, n-tridecyl (meth)acrylate, isotridecyl (meth)acrylate or n-tetradecyl (meth)acrylate, more preferably n-dodecyl (meth)acrylate or n-tetradecyl (meth)acrylate or mixtures thereof and most preferably the respective acrylates.

The optional further monomers (D), which are different than monomers (A), (B) and (C), are preferably selected from the group consisting of cycloaliphatic (meth)acrylates (D1), (meth)acrylates of polyalkylene glycol monoalkyl ethers (D2), vinyl alkanoates (D3), allyl compounds (D4), vinyl ethers (D5), N-vinyllactams (D6), N-vinylimidazoles (D7), ethylenically unsaturated aromatics (D8), sulfur dioxide (D9) and ethylenically unsaturated nitriles (D10).

It is possible here for at least one monomer (D), preferably one to four, more preferably one to three, even more preferably one or two and especially exactly one monomer(s) (D) to be used optionally.

Examples of cycloaliphatic (meth)acrylates (D1) are (meth)acrylates of alcohols having at least one, preferably one or two and more preferably one cycloaliphatic ring system(s) and having 5 to 20 carbon atoms. Preferred monomers are cyclopentyl (meth)acrylate, cyclohexyl (meth)acrylate and norbornyl (meth)acrylate, particular preference being given to the respective acrylates.

(Meth)acrylates of polyalkylene glycol monoalkyl ethers (D2) are preferably (meth)acrylic esters of mono-C₁-C₄-alkyl ethers of poly-1 ,2-propylene glycol having a molar mass between 134 and 1178 or polyethylene glycol having a molar mass between 106 and 898, and also ethylene glycol mono-C₁-C₄-alkyl ethers or propylene glycol mono-C₁-C₄-alkyl ethers. Particular preference is given to ethylene glycol monomethyl ether, ethylene glycol monoethyl ether, ethylene glycol

mono-n-butyl ether, 1,2-propanediol monomethyl ether, 1,2-propanediol monoethyl ether, diethylene glycol monomethyl ether, diethylene glycol monoethyl ether and diethylene glycol mono-n-butyl ether.

Among the vinyl alkanoates (D3), preference is given to vinyl acetate, vinyl propionate, vinyl butanoate, vinyl pentanoate, vinyl hexanoate, vinyl 2-ethylhexanoate, vinyl octanoate, vinyl ester of neodecanoic acid ("Veova"), vinyl decanoate, vinyl dodecanoate, vinyl tridecanoate, vinyl isotridecanoate, vinyl tetradecanoate, vinyl pentadecanoate, vinyl hexadecanoate and vinyl octadecanoate, particular preference to vinyl acetate, vinyl propionate, vinyl hexanoate, vinyl 2-ethylhexanoate, and vinyl ester of neodecanoic acid ("Veova"), very particular preference to vinyl acetate.

Among the allyl compounds (D4), preference is given to allyl alcohol, allyl alcohol C₁-C₄-alkyl ethers and allyl alkanoates of those carboxylic acids as listed under (D3).

Among the vinyl ethers (D5), preference is given to cyclohexyl vinyl ether, isopropyl vinyl ether, isobutyl vinyl ether, tert-butyl vinyl ether, n-butyl vinyl ether, octyl vinyl ether, decyl vinyl ether, dodecyl vinyl ether, tetradecyl vinyl ether, hexadecyl vinyl ether and octadecyl vinyl ether.

N-Vinyllactams (D6) are preferably N-vinylcaprolactam and N-vinylpyrrolidone.

Among the N-vinylimidazoles (D7), preference is given to N-vinylimidazole.

Among the ethylenically unsaturated aromatics (D8), preference is given to styrene and 1-methylstyrene, particular preference to styrene.

Among the ethylenically unsaturated nitriles (D10), preference is given to acrylonitrile and methacrylonitrile, particular preference to acrylonitrile.

Among the optionally usable monomers (D), preference is given to (D1), (D3), (D5) and/or (D8), particular preference to (D1), (D3) and/or (D5), very particular preference to (D1) and/or (D3).

The stoichiometry of the monomers (A), (B), (C) and optionally (D) is preferably chosen such that the monomers in copolymerized form have a molar incorporation ratio of (A):(B):(C):(D) of 1:0.5 to 2.0:0 to 2.0:0 to 0.1.

Preferably, the molar incorporation ratio (A):(B):(C):(D) is 1:0.6 to 1.5:0.1 to 1.5:0 to 0.05.

More preferably, the molar incorporation ratio (A):(B):(C):(D) is 1:0.7 to 1.0:0.2 to 1.0:0.

In a preferred embodiment no monomer (C) is present in the copolymer.

In another preferred embodiment no monomer (D) is present in the copolymer.

In another preferred embodiment neither monomer (C) nor monomer (D) is present in the copolymer. Hence, the copolymer is preferably made of monomers (A) and (B), more preferably of maleic anhydride and (B), even more preferably in a molar incorporation ratio of (A) : (B) 1 : 0.95 to 1.05.

The inventive copolymer is obtainable in a first step by polymerizing a mixture of the monomers (A), (B), optionally (C) and optionally (D).

The copolymers are obtainable by the customary copolymerization processes, for example solvent polymerization, emulsion polymerization, precipitation polymerization or bulk polymerization, preferably solvent polymerization or bulk polymerization; they are preferably obtained via said copolymerization processes.

In a first preparation stage, the monomer components can be polymerized neat, in emulsion or preferably in solution. It is possible here to use a single monomer species or a mixture of several such monomer species for each monomer component. The polymerization reaction is generally conducted at standard pressure and under a protective gas, such as nitrogen, but it is also possible to work at elevated pressures of up to 25 bar, for example in an autoclave. The polymerization temperatures are generally 50 to 250°C, especially 90 to 210°C, in particular 120 to 180°C, typically 140 to 160°C. Suitable polymerization reactors are in principle all customary continuous or batchwise apparatuses, for example a stirred tank, stirred tank cascade, tubular reactor or loop reactor.

Typically, the polymerization is initiated by initiators that break down by a free-radical mechanism; suitable initiators for this purpose are air or oxygen of organic peroxides and/or hydroperoxides, and also organic azo compounds. Examples of useful organic peroxides or hydroperoxides include diisopropylbenzene hydroperoxide, cumene hydroperoxide, methyl isobutyl ketone peroxide, di-tert-butyl peroxide and tert-butyl perisononanoate. An example of a suitable organic azo compound is azobisisobutyronitrile ("AIBN"). In addition, it is possible to use suitable chain transfer agents in the polymerization as well, such as thio alcohols, aldehydes or ketones.

If solvents or emulsion media are used in the polymerization as well, the customary high-boiling inert liquids are useful for this purpose, such as aliphatic hydrocarbons, e.g. heptane, Shellsol^{®} D70, white oil, lamp oil), aromatic hydrocarbons, e.g. ethylbenzene, diethylbenzenes, toluene, xylenes or corresponding technical hydrocarbon mixtures such as Shellsol^{®}, Solvesso^{®} or Solvent Naphtha, and also dialkyl 1,2-cyclohexanedicarboxylates, preferably diisononyl 1,2-cyclohexanedicarboxylate.

In a second reaction stage, the copolymer thus obtainable, preferably the copolymer thus obtained, is reacted with the dialkylamine (E). The reaction generally does not require any catalysts; instead, the reaction can be effected at temperatures of 50 to 160°C, preferably 60 to 140 and more preferably 70 to 120°C. The reaction can preferably be effected in an inert solvent, preference being given to the solvents listed above for the polymerization.

The dialkylamine (E) is at least one, preferably one or two and more preferably exactly one dialkylamine(s) (E), wherein the alkyl radicals are each independently alkyl radicals having at least 17 up to 30, preferably 17 to 26, more preferably 17 to 24 and most preferably 17 to 22 carbon atoms.

The two alkyl radicals may be the same or different, preferably the same.

The alkyl radicals having 17 up to 30 carbon atoms may be linear or branched, preferably linear, particular preference being given to n-heptadecyl, n-octadecyl, n-nonadecyl, n-eicosyl, n-heneicosyl, n-docosyl, lignoceryl, ceryl and myricyl, and particular preference to n-octadecyl, n-nonadecyl and n-eicosyl.

Preferred dialkylamines (E) are di-n-octadecylamine, di-n-nonadecylamine and di-n-eicosylamine.

The molar ratio of dialkylamine (E) based on incorporated units of the dicarboxylic acid (A) in the copolymer is preferably at least 1.2:1, more preferably 1.3 to 2.0:1, even more preferably 1.5 to 2.0:1 and especially 2.0:1.

In a preferred embodiment, the dialkylamine is used in such a way that, ideally, one equivalent of dialkylamine (E) reacts with the incorporated units of the dicarboxylic acid (A) in the copolymer to form amide groups and one further equivalent of dialkylamine (E) neutralizes the free carboxyl groups formed.

In a further embodiment, it is possible to dispense with the second reaction stage if the monomer (A) is already used in the form of the di- or monoamide, preferably of the monoamide, of the unsaturated dicarboxylic acid with dialkylamines (E).

In this case, amidation of the copolymer formed from (A), (B) and optionally (C), and optionally (D), is no longer required since the monomer (A) has already been used in the polymerization as the corresponding amide. In this case, the free carboxyl groups present in the copolymer thus obtained may still be neutralized to an extent of 20 to 100 mol% with the dialkylamine (E).

The inventive copolymer, after reaction with component (E), preferably has a weight-average molecular weight (M_{w}) in the range from 2000 to 20 000, more preferably from 2200 to 8000 and most preferably from 2500 to 6000 g/mol (determined in each case by gel permeation chromatography). The polydispersity is preferably up to 3, more preferably 2 to 3.

This copolymer can preferably be used in fuels in its function as a paraffin dispersant ("WASA"). The copolymer often displays its action as a paraffin dispersant particularly well only once together with the customary flow improvers:
In the context of present invention, flow improvers shall be understood to mean all additives which improve the cold properties of middle distillate fuels. As well as the actual cold flow improvers ("MDFI"), these are also nucleators (cf. also Ullmann's Encyclopedia of Industrial Chemistry, 5th edition, volume A16, p. 719 ff.).

When cold flow improvers are present, the middle distillate fuels comprise these, in addition to the copolymer, in an amount of typically 1 to 2000 ppm by weight, preferably of 5 to 1000 ppm by weight, especially of 10 to 750 ppm by weight and in particular of 50 to 500 ppm by weight, for example of 150 to 400 ppm by weight.

Cold flow improvers of this kind are described, for example, in WO 2007/147753, particularly at page 13 line 1 to page 16 - 32 therein, which is hereby incorporated into the present disclosure by reference.

Preferred flow improvers are ethylene-vinyl acetate copolymers as described in WO 99/29748, or comb polymers as described in WO 2004/035715, and form, together with the inventive copolymer in its function as a paraffin dispersant, an efficient and versatile cold stabilization system for middle distillate fuels, especially for those having a proportion of biodiesel.

More preferably, the flow improvers are copolymers of ethylene with at least one further ethylenically unsaturated monomer, preferably selected from alkenyl carboxylates, (meth)acrylic esters, dialkyl maleates, dialkyl fumarates and olefins.

Most preferably, the flow improvers are ter- or quaterpolymers of ethylene and at least one alkenyl carboxylate and with at least one further ethylenically unsaturated monomer, preferably selected from (meth)acrylic esters, dialkyl maleates, dialkyl fumarates and olefins.

Suitable olefins are, for example, those having 3 to 10 carbon atoms and having 1 to 3, preferably having 1 or 2, especially having one carbon-carbon double bond(s). In the latter case, the carbon-carbon double bond may either be terminal (α-olefins) or internal. Preference is given, however, to α-olefins, particular preference to α-olefins having 3 to 6 carbon atoms, for example propene, 1-butene, 1-pentene and 1-hexene.

Suitable (meth)acrylic esters are, for example, esters of (meth)acrylic acid with C₁- to C₁₀-alkanols, especially with methanol, ethanol, propanol, isopropanol, n-butanol, sec-butanol, isobutanol, tert-butanol, pentanol, hexanol, heptanol, octanol, 2-ethylhexanol, nonanol and decanol.

Suitable alkenyl carboxylates are, for example, the vinyl and propenyl esters of carboxylic acids having 2 to 20 carbon atoms, wherein the hydrocarbyl radical may be linear or branched. Among these, preference is given to the vinyl esters. Among the carboxylic acids having a branched hydrocarbyl radical, preference is given to those wherein the branch is in the α position to the carboxyl group, the α carbon atom more preferably being tertiary, meaning that the carboxylic acid is what is called a neocarboxylic acid. However, the hydrocarbyl radical of the carboxylic acid is preferably linear.

Examples of suitable alkenyl carboxylates are vinyl acetate, vinyl propionate, vinyl butyrate, vinyl 2-ethylhexanoate, vinyl neopentanoate, vinyl hexanoate, vinyl neononanoate, vinyl neodecanoate and the corresponding propenyl esters, preference being given to the vinyl esters. A particularly preferred alkenyl carboxylate is vinyl acetate; typical copolymers that result therefrom are ethylene-vinyl acetate copolymers ("EVA"), which are used on a large scale and diesel fuels.

More preferably, the ethylenically unsaturated monomer is selected from alkenyl carboxylates.

Examples of dialkyl maleates and dialkyl fumarates are the methyl, ethyl, n-propyl, isopropyl, n-butyl, sec-butyl, isobutyl, n-pentyl, n-hexyl, 2-ethylhexyl and 2-propylheptyl esters of maleic acid or fumaric acid, these being mixed or preferably identical esters, i.e. in the case of alkyl radicals are the same.

Also suitable are copolymers comprising two or more different alkenyl carboxylates in copolymerized form, these differing in terms of the alkenyl function and/or in terms of the carboxylic acid group. Likewise suitable are copolymers which, as well as the alkenyl carboxylate(s), comprise at least one olefin and/or at least one (meth)acrylic ester in copolymerized form.

Such copolymers preferably have a number-average molecular weight Mₙ of 1000 to 20 000, more preferably of 1000 to 10000 and especially of 1000 to 6000.

Copolymer (I) is added to the fuels so that the middle distillate fuels comprise the copolymer in an amount of typically 10 to 5000 ppm by weight, preferably of 20 to 3000 ppm by weight, especially of 30 to 2000 ppm by weight and in particular of 50 to 1000 ppm by weight.

### Antistatic agent (II)

The at least one antistatic agent is preferably selected from the group consisting of
(F) copolymers of sulfur dioxide with one or more linear or branched 1-olefins having from 2 to 24 carbon atoms,
(F1) at least one further component comprising one or more basic nitrogen atoms and having at least one relatively long-chain linear or branched hydrocarbon radical having at least four carbon atoms or an equivalent structural element which ensures the solubility of component (F) in the fuel,
(G) organic sulfonic acids which have a hydrocarbyl radical having from 6 to 40 carbon atoms, and
(H) quaternary nitrogen components.

In one embodiment of the present invention the antistatic agent is a mixture of
(F) at least one copolymer of sulfur dioxide with one or more linear or branched 1-olefins having from 2 to 24 carbon atoms and
(G) at least one organic sulfonic acid which have a hydrocarbyl radical having from 6 to 40 carbon atoms.

In another embodiment of the present invention the antistatic agent is a mixture of
(F) at least one copolymer of sulfur dioxide with one or more linear or branched 1-olefins having from 2 to 24 carbon atoms, and
(F1) at least one further component comprising one or more basic nitrogen atoms and having at least one relatively long-chain linear or branched hydrocarbon radical having at least four carbon atoms or an equivalent structural element which ensures the solubility of component (F) in the fuel, and
(G) at least one organic sulfonic acid which have a hydrocarbyl radical having from 6 to 40 carbon atoms.

In another embodiment of the present invention the antistatic agent is
(H) at least one quaternary nitrogen component.

### Component (F)

The structure and the known preparation processes for the olefin-sulfur dioxide copolymer of component (F) are described in documents US-A 3 917 466, US-A 4 416 668, and WO 08/107371. Component (F) is preferably a copolymer of sulfur dioxide with one or more linear or branched 1-olefins having from 2 to 24 carbon atoms. Typically, the copolymers (polysulfones) of component (F) are alternating 1:1 copolymers in which one sulfone unit generally follows one olefin unit; it is also possible for sequences of two or more olefin units to occur in small amounts. Some of the olefin monomers may be replaced by ethylenically unsaturated carboxylic acids (e.g. acrylic acid, methacrylic acid or vinylacetic acid) or ethylenically unsaturated dicarboxylic acids (e.g. maleic acid or fumaric acid) or derivatives thereof (e.g. maleic anhydride), so that the copolymer of component (F) is formed especially from 50 mol% of sulfur dioxide or sulfone units, from 40 to 50 mol% of olefin units and from 0 to 10 mol% of units from said ethylenically unsaturated carboxylic acids, ethylenically unsaturated dicarboxylic acids or derivatives thereof.

Useful branched and especially linear 1-olefins having from 2 to 24 carbon atoms for preparing component (F) include, for example, ethene, propene, 1-butene, 2-butene, isobutene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 1-heneicosene, 1-docosene, 1-tricosene, 1-tetracosene or mixtures thereof.

Particular preference is given to linear 1-olefins having from 6 to 16 carbon atoms, especially having from 8 to 14 carbon atoms, or linear 1-olefins having from 12 to 22 carbon atoms, especially from 14 to 20 carbon atoms, and also mixtures thereof, for example a mixture of 1-dodecene and 1-tetradecene. It may also be advantageous to use mixtures of low molecular weight and high molecular weight 1-olefins, i.e. 1-olefin mixtures with a bimodal distribution, to prepare component (F), for example mixtures of 1-olefins having from 6 to 13 carbon atoms and 1-olefins having from 14 to 20 carbon atoms, or mixtures of 1-olefins having from 6 to 10 carbon atoms and 1-olefins having from 11 to 15 carbon atoms, or mixtures of 1-olefins having from 2 to 24 carbon atoms and a single 1-olefin having from 4 to 10 carbon atoms. When technical or other 1-olefin mixtures are used, the specification of the carbon atoms within the ranges specified above is based on the mean carbon atom number of these mixtures, where the mean carbon atom number is the sum over the mathematical products of fraction by weight and corresponding carbon atom number of all 1-olefins present in the mixture.

The olefin-sulfur dioxide copolymer of component (F) typically has a number-average molecular weight Mₙ of from 2000 to 1 000 000, especially from 4000 to 100 000, in particular from 6000 to 25 000. The polydispersity (PDI = M_{w}/Mₙ) is generally in the range from 1.1 to 30, especially from 1.5 to 20, in particular from 2 to 10, most preferably from 2.3 to 5.

US-A 3 917 466 recommends the preparation of the olefin-sulfur dioxide copolymers by a suitable free-radical polymerization process in the temperature range from 0 to 50°C; the solvents to be used are benzene, toluene or xylene; only a low molar excess of sulfur dioxide (a maximum of 1.5 times the molar amount) is employed; free-radical initiators such as peroxides or azo compounds and the additional irradiation with actinic light are recommended. According to document US-A 4 416 668, the olefin-sulfur dioxide copolymers can be prepared by emulsion polymerization processes in aqueous medium. Both preparation methods are, however, in need of improvement, and the use of the olefin-sulfur dioxide copolymers thus obtained in the inventive additive formulation leads to disadvantages in their handling and efficacy. In particular, the content of volatile and combustible starting olefins is still too high, such that the flashpoint of the resulting antistat additive formulation is too low. There was thus the need for an improved preparation process for the olefin-sulfur dioxide copolymers in order to make their use in the inventive additive formulation problem-free.

Dosage of component (F) in fuels is often accompanied by a further component (F1) as defined in the claims comprising

one or more basic nitrogen atoms and having at least one relatively long-chain linear or branched hydrocarbon radical having at least four carbon atoms or an equivalent structural element which ensures the solubility of component (F) in the fuel.

The compound of component (F1) which comprises one or more basic nitrogen atoms must be soluble, but at least homogeneously distributable, in the fuel to be treated with the additive formulation. Component (F1) is in many cases likewise a polymer. It has at least one relatively long-chain branched or especially linear hydrocarbon radical having at least 4 carbon atoms, preferably having at least 8 carbon atoms, especially having at least 12 carbon atoms, in particular having from 12 to 30 carbon atoms, provided that solubility in the fuel is not ensured by an equivalent structural element. The compound of component (F1) preferably does not comprise any free hydroxyl groups because they might impair the efficacy of the inventive additive formulation under some circumstances.

In the compound of component (F1), said relatively long-chain branched or linear hydrocarbon radical may be on the basic nitrogen atom or on one of the basic nitrogen atoms or on a carbon atom, especially on a carbon atom of the main polymer chain in polymeric structures. Typical relatively long-chain branched or linear hydrocarbon radicals are, for example, linear alkyl radicals as occur in fatty acids, and polyisobutyl radicals, especially those having from 20 to 150 carbon atoms, in particular from 35 to 100 carbon atoms.

According to the invention oligomeric or polymeric structure types for component (F1) with such relatively long-chain hydrocarbon radicals are reaction products of oligoethyleneamines or oligoethyleneimines with olefin-maleic anhydride copolymers derivatized with amines or polyamines, in particular α-olefin-maleimide copolymers having at least one basic nitrogen atom.

The structure and the preparation process for the particularly preferred α-olefin-maleimide copolymers with at least one basic nitrogen atom of component (F1) are described in principle in US-A 4416668. In a preferred embodiment, these α-olefin-maleimidecopolymers are obtainable by free-radical polymerization of one or more linear or branched α-olefins having from 6 to 50 carbon atoms with maleic anhydride and subsequent reaction with one or more aliphatic polyamines. The α-olefin-maleic anhydride copolymers and the α-olefin-maleimide copolymers prepared therefrom are typically 1:1 copolymers alternating in the main polymer chain, in which one maleic acid unit always follows one α-olefin unit. As a result of the relatively long-chain branched or linear hydrocarbon radicals, comb structures generally arise.

Useful branched and especially linear 1-olefins having from 6 to 50 carbon atoms for preparing the α-olefin-maleimide copolymers of component (F1) are, for example, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octa-decene, 1-nonadecene, 1-eicosene, 1-heneicosene, 1-docosene, 1-tricosene, 1-tetracosene, 1-triacontene, 1-tetracontene, 1-pentacontene or mixtures thereof. Particular preference is given to linear 1-olefins having from 12 to 30 carbon atoms, especially having from 16 to 24 carbon atoms, and mixtures thereof. The free-radical polymerization of the 1-olefins with maleic anhydride is performed by the customary methods. For this purpose, the customary free-radical initiators are used, especially those based on peroxides or azo compounds, for example di-tert-butyl peroxide, tert-butyl peroxypivalate or azobisisobutyronitrile, the customary temperature and pressure ranges are employed, for example from 50 to 150 °C at standard pressure, and the reactions are performed in the customary solvents, for example aromatic hydrocarbons.

On completion of polymerization, the resulting α-olefin-maleic anhydride copolymers are reacted with one or more aliphatic polyamines to give the corresponding imide.

Polyamines with a primary amino group are required for the imide formation, and at least one further primary, secondary or tertiary amino group for the basic nitrogen atom. Suitable examples in this context are relatively short-chain diamines such as ethylenediamine, 1,3-propylenediamine, 3-(N,N-dimethylamino)propylamine ("DMAPA") or bis[3-(N,N-dimethylamino)propyl]amine ("bis-DMAPA") or relatively long-chain diamines such as tallow fat-1,3-diaminopropane. The customary reaction conditions for this imide formation are known to those skilled in the art.

Tallow fat-1,3-diaminopropane is 1,3-diaminopropane N-substituted with one tallow fat-derived radical, usually a mixture of C₁₄- to C₁₈-alkyl radicals.

Typical examples of α-olefin-maleic anhydride copolymers reacted with aliphatic polyamines are the reaction products which have a comblike structure formed from C_{20/24}-α-olefin-maleic anhydride copolymers and 3-(N,N-dimethylamino)propylamine ("DMAPA") or bis[3-(N,N-dimethylamino)propyl]amine ("bis-DMAPA").

The described α-olefin-maleimidecopolymers having at least one basic nitrogen atom of component (F1) typically have a weight-average molecular weight M_{w} of from 500 to 50 000, especially from 1000 to 10 000. A typical α-olefin-maleimidecopolymer is an α-olefin-maleic anhydride copolymer which has been reacted with tallow fat-1,3-diaminopropane to give the imide and has a weight-average molecular weight M_{w} in the range from 1000 to 10 000.

### Component (G)

The organic sulfonic acid (G) which, to achieve the oil solubility, appropriately has a relatively long-chain or relatively voluminous hydrocarbyl radical, preferably an aliphatic, aromatic or aliphatically substituted aromatic radical, more preferably an aliphatically substituted aromatic radical, especially having from 6 to 40 carbon atoms, in particular from 8 to 36 carbon atoms, more preferably having from 10 to 32 carbon atoms.

Suitable such hydrocarbyl radicals are linear or branched alkyl or alkenyl radicals, e.g. n-hexyl, n-heptyl, n-octyl, 2-ethylhexyl, n-nonyl, iso-nonyl, n-decyl, 2-propylheptyl, n-undecyl, iso-undecyl, n-dodecyl, n-tridecyl, isotridecyl, n-tetradecyl, n-pentadecyl, n-hexadecyl, n-heptadecyl, iso-heptadecyl, n-octadecyl, n-nonadecyl, n-eicosyl, n-heneicosyl, n-docosyl, n-tricosyl, n-tetracosyl, oleyl, linolyl or linolenyl, cycloalkyl radicals, e.g. cyclohexyl, methylcyclohexyl or dimethylcyclohexyl, aryl radicals, e.g. phenyl or naphthyl, aralkyl radicals, e.g. benzyl or 2-phenylethyl, or more preferably alkaryl radicals, especially phenyl or naphthyl substituted by linear or branched C₁- to C₁₈-alkyl groups, e.g. tolyl, xylyl, n-nonylphenyl, n-decylphenyl, n-dodecylphenyl, isotridecylphenyl, n-nonylnaphthyl, iso-nonylnaphthyl, di-n-nonylnaphthyl, di-iso-nonylnaphthyl, n-decylnaphthyl, di-n-decylnaphthyl, n-dodecylnaphthyl, di-n-dodecylnaphthyl, isotridecylnaphthyl or diisotridecylnaphthyl.

In the latter monosubstituted phenyl radicals, the alkyl groups may be in the ortho, meta or para position to the sulfonic acid group, preference being given to para orientation. Typical examples of component (G) are therefore n-nonylbenzenesulfonic acid, iso-nonylbenzenesulfonic acid, n-decylbenzenesulfonic acid, n-dodecylbenzenesulfonic acid, isotridecylbenzenesulfonic acid, n-nonylnaphthylsulfonic acid, iso-nonylnaphthylsulfonic acid, di-n-nonylnaphthylsulfonic acid, di-iso-nonylnaphthylsulfonic acid, n-decylnaphthylsulfonic acid, di-n-decylnaphthylsulfonic acid, n-dodecylnaphthylsulfonic acid, di-n-dodecylnaphthylsulfonic acid, isotridecylnaphthylsulfonic acid and diisotridecylnaphthylsulfonic acid.

In addition to the organic sulfonic acids mentioned, it is also possible in principle, however less preferred, to use, as component (G), for example, oil-soluble organic sulfinic acids or organic phosphonic acids which likewise appropriately have a relatively long-chain or relatively voluminous hydrocarbyl radical, especially one having from 6 to 40 carbon atoms, in particular from 8 to 32 carbon atoms, more preferably having from 10 to 24 carbon atoms.

### Component (H)

The at least one quaternary nitrogen component (H) refers, in the context of the present invention, to nitrogen compounds quaternized in the presence of an acid or in an acid-free manner, preferably obtainable by addition of a compound comprising at least one oxygen- or nitrogen-containing group reactive with an anhydride and additionally at least one quaternizable amino group onto a polycarboxylic anhydride compound and subsequent quaternization.

Often component (H) is added to the fuel as a deposit control additive, however, due to its permanent positive charge it increases the conductivity of the fuel and, therefore, acts as an antistatic additive.

In most cases the quaternary nitrogen component (H) is an ammonium compound, however in the context of the present document morpholinium, piperidinium, piperazinium, pyrrolidinium, imidazolinium or pyridinium cations are also encompassed by the phrase "quaternary nitrogen component".

The quaternary ammonium compounds (H) are of the formula

⁺NR¹R²R³R⁴ A⁻

in which
A⁻ stands for an anion, preferably a carboxylate R⁵COO⁻ or a carbonate R⁵O-COO⁻,
   and
R¹, R², R³, R⁴, and R⁵ independently of another are an organic residue with from 1 to 100 carbon atoms, substituted or unsubstituted, preferably unsubstituted, linear or branched alkyl, alkenyl or hydroxyalkyl residue with 1 to 100, more preferably 1 to 75, even more preferably 1 to 30, most preferably 1 to 25 and especially 1 to 20 carbon atoms,
R⁵ additionally may be substituted or unsubstituted cycloalkyl or aryl residues bearing 5 to 20, preferably 5 to 12 carbon atoms.

It is also possible that the anion may be multiply charged negatively, e.g. if anions of dibasic acids are used, in this case the stoichiometric ratio of the ammonium ions to the anions corresponds to the ratio of positive and negative charges.

The same is true for salts in which the cation bears more than one ammonium ion, e.g. of the substituents connect two or more ammonium ions.

In the organic residues the carbon atoms may be interrupted by one or more oxygen and/or sulphur atoms and/or one or more substituted or unsubstituted imino groups, and may be substituted by C₆-C₁₂-aryl, C₅-C₁₂-cycloalkyl or a five- or six-membered, oxygen-, nitrogen- and/or sulphur-containing heterocycle or two of them together form an unsaturated, saturated or aromatic ring which may be interrupted by one or more oxygen and/or sulphur atoms and/or one or more substituted or unsubstituted imino groups, where the radicals mentioned may each be substituted by functional groups, aryl, alkyl, aryloxy, alkyloxy, halogen, heteroatoms and/or heterocycles.

Two of the residues R¹ to R⁴ may together form an unsaturated, saturated or aromatic ring, preferably a five-, six- or seven-membered ring (including the nitrogen atom of the ammonium ion).

In this case the ammonium cation may be a morpholinium, piperidinium, piperazinium, pyrrolidinium, imidazolinium or pyridinium cation.

In these definitions
C₁-C₂₀-alkyl which may be substituted by functional groups, aryl, alkyl, aryloxy, alkyloxy, halogen, heteroatoms and/or heterocycles is, for example, methyl, ethyl, propyl, isopropyl, n-butyl, sec-butyl, tert-butyl, pentyl, hexyl, heptyl, octyl, 2-ethylhexyl, 2,4,4-trimethylpentyl, decyl, dodecyl, tetradecyl, heptadecyl, octadecyl, eicosyl, 1,1-dimethylpropyl, 1,1-dimethylbutyl, 1,1,3,3-tetramethylbutyl, benzyl, 1-phenylethyl, 2-phenylethyl, α,α-dimethylbenzyl, benzhydryl, p-tolylmethyl,1-(p-butylphenyl)ethyl, p-chlorobenzyl, 2,4-dichlorobenzyl, p-methoxybenzyl, methoxybenzyl, 2-cyanoethyl, 2-cyanopropyl, 2-methoxycarbonylethyl, 2-ethoxycarbonylethyl, 2-butoxycarbonylpropyl, 1,2-di-(methoxycarbonyl)ethyl, 2-methoxyethyl, 2-ethoxyethyl, 2-butoxyethyl, diethoxymethyl, diethoxyethyl, 1,3-dioxolan-2-yl, 1,3-dioxan-2-yl, 2-methyl-1,3-dioxolan-2-yl, 4-methyl-1,3-dioxolan-2-yl, 2-isopropoxyethyl, 2-butoxypropyl, 2-octyloxyethyl, chloromethyl, 2-chloroethyl, trichloromethyl, trifluoromethyl, 1,1-dimethyl-2-chloroethyl, 2-methoxyisopropyl, 2-ethoxyethyl, butylthiomethyl, 2-dodecylthioethyl, 2-phenylthioethyl, 2,2,2-trifluoroethyl, 2-hydroxyethyl, 2-hydroxypropyl, 3-hydroxypropyl, 4-hydroxybutyl, 6-hydroxyhexyl, 2-aminoethyl, 2-aminopropyl, 3-aminopropyl, 4-aminobutyl, 6-aminohexyl, 2-methylaminoethyl, 2-methylaminopropyl, 3-methylaminopropyl, 4-methylaminobutyl, 6-methylaminohexyl, 2-dimethylaminoethyl, 2-dimethylaminopropyl, 3-dimethylaminopropyl, 4-dimethylaminobutyl, 6-dimethylaminohexyl, 2-hydroxy-2,2-dimethylethyl, 2-phenoxyethyl, 2-phenoxypropyl, 3-phenoxypropyl, 4-phenoxybutyl, 6-phenoxyhexyl, 2-methoxyethyl, 2-methoxypropyl, 3-methoxypropyl, 4-methoxybutyl, 6-methoxyhexyl, 2-ethoxyethyl, 2-ethoxypropyl, 3-ethoxypropyl, 4-ethoxybutyl or 6-ethoxyhexyl, and
C₂-C₂₀alkyl interrupted by one or more oxygen and/or sulphur atoms and/or one or more substituted or unsubstituted imino groups is, for example, 5-hydroxy-3-oxa-pentyl, 8-hydroxy-3,6-dioxaoctyl, 11-hydroxy-3,6,9-trioxaundecyl, 7-hydroxy-4-oxaheptyl, 11-hydroxy-4,8-dioxaundecyl, 15-hydroxy-4,8,12-trioxapentadecyl, 9-hydroxy-5-oxanonyl, 14-hydroxy-5,10-oxatetradecyl, 5-methoxy-3-oxapentyl, 8-methoxy-3,6-dioxaoctyl, 11-methoxy-3,6,9-trioxaundecyl, 7-methoxy-4-oxaheptyl, 11-methoxy-4,8-dioxa-undecyl, 15-methoxy-4,8,12-trioxapentadecyl, 9-methoxy-5-oxanonyl, 14-methoxy-5,10-oxatetradecyl, 5-ethoxy-3-oxapentyl, 8-ethoxy-3,6-dioxaoctyl, 11-ethoxy-3,6,9-trioxaundecyl, 7-ethoxy-4-oxaheptyl, 11-ethoxy-4,8-dioxaundecyl, 15-ethoxy-4,8,12-trioxapentadecyl, 9-ethoxy-5-oxanonyl or 14-ethoxy-5,10-oxatetradecyl.

If two radicals form a ring, they can together be 1,3-propylene, 1,4-butylene, 1,5-pentylene, 2-oxa-1,3-propylene, 1-oxa-1,3-propylene, 2-oxa-1,3-propylene, 1-oxa-1,3-propenylene, 1-aza-1,3-propenylene, 1-C₁-C₄-alkyl-1-aza-1,3-propenylene, 1,4-buta-1,3-dienylene, 1-aza-1,4-buta-1,3-dienylene or 2-aza-1,4-buta-1,3-dienylene.

The number of oxygen and/or sulphur atoms and/or imino groups is not subject to any restrictions. In general, there will be no more than 5 in the radical, preferably no more than 4 and very particularly preferably no more than 3.

Furthermore, there is generally at least one carbon atom, preferably at least two carbon atoms, between any two heteroatoms.

Substituted and unsubstituted imino groups can be, for example, imino, methylimino, isopropylimino, n-butylimino or tert-butylimino.

Furthermore,
functional groups can be carboxy, carboxamide, hydroxy, di(C₁-C₄-alkyl)amino, C₁-C₄-alkyloxycarbonyl, cyano or C₁-C₄-alkyloxy,
C₆-C₁₂-aryl which may be substituted by functional groups, aryl, alkyl, aryloxy, alkyloxy, halogen, heteroatoms and/or heterocycles is, for example, phenyl, tolyl, xylyl, α-naphthyl, β-naphthyl, 4-diphenylyl, chlorophenyl, dichlorophenyl, trichlorophenyl, difluorophenyl, methylphenyl, dimethylphenyl, trimethylphenyl, ethylphenyl, diethylphenyl, isopropylphenyl, tert-butylphenyl, dodecylphenyl, methoxyphenyl, dimethoxyphenyl, ethoxyphenyl, hexyloxyphenyl, methylnaphthyl, isopropylnaphthyl, chloronaphthyl, ethoxynaphthyl, 2,6-dimethylphenyl, 2,4,6-trimethylphenyl, 2,6-dimethoxyphenyl, 2,6-dichlorophenyl, 4-bromophenyl, 2- or 4-nitrophenyl, 2,4- or 2,6-dinitrophenyl, 4-dimethylaminophenyl, 4-acetylphenyl, methoxyethylphenyl or ethox-ymethylphenyl,
C₅-C₁₂-cycloalkyl which may be substituted by functional groups, aryl, alkyl, aryloxy, alkyloxy, halogen, heteroatoms and/or heterocycles is, for example, cyclopentyl, cyclohexyl, cyclooctyl, cyclododecyl, methylcyclopentyl, dimethylcyclopentyl, methylcyclohexyl, dimethylcyclohexyl, diethylcyclohexyl, butylcyclohexyl, methoxycyclohexyl, dimethoxycyclohexyl, diethoxycyclohex-yl, butylthiocyclohexyl, chlorocyclohexyl, dichlorocyclohexyl, dichlorocyclopentyl or a saturated or unsaturated bicyclic system such as norbornyl or norbornenyl,
a five- or six-membered, oxygen-, nitrogen- and/or sulphur-containing heterocycle is, for example, furyl, thienyl, pyrryl, pyridyl, indolyl, benzoxazolyl, dioxolyl, dioxyl, benzimidazolyl, benzothiazolyl, dimethylpyridyl, methylquinolyl, dimethylpyrryl, methoxyfuryl, dimethoxypyridyl, difluoro-pyridyl, methylthienyl, isopropylthienyl or tert-butylthienyl and
C₁ to C₄-alkyl is, for example, methyl, ethyl, propyl, isopropyl, n-butyl, sec-butyl or tert-butyl.

The residues R¹ to R⁵ are preferably C₂-C₁₈-alkyl or C₆-C₁₂-aryl, more preferably C₄-C₁₆-alkyl or C₆-C₁₂-aryl, and even more preferably C₄-C₁₆-alkyl or C₆-aryl.

The residues R¹ to R⁵ may be saturated or unsaturated, preferably saturated.

Preferred residues R¹ to R⁵ do not bear any heteroatoms other than carbon of hydrogen.

Preferred examples of R¹ to R⁴ are methyl, ethyl, propyl, isopropyl, n-butyl, sec-butyl, tert-butyl, pentyl, hexyl, heptyl, octyl, 2-ethylhexyl, 2,4,4-trimethylpentyl, 2-propylheptyl, decyl, dodecyl, tetradecyl, heptadecyl, octadecyl, eicosyl, 1,1-dimethylpropyl, 1,1-dimethylbutyl, 1,1,3,3-tetramethylbutyl, benzyl, 1-phenylethyl, 2-phenylethyl, α,α-dimethylbenzyl, benzhydryl, p-tolylmethyl or 1-(p-butylphenyl)ethyl.

In a preferred embodiment at least one of the residues R¹ to R⁴ is selected from the group consisting of 2-hydroxyethyl, hydroxyprop-1-yl, hydroxyprop-2-yl, 2-hydroxybutyl or 2-hydroxy-2-phenylethyl.

In one embodiment R⁵ is a polyolefin-homo- or copolymer, preferably a polypropylene, polybutene or polyisobutene residue, with a number-average molecular weight (Mₙ) of 85 to 20000, for example 113 to 10 000, or 200 to 10000 or 350 to 5000, for example 350 to 3000, 500 to 2500, 700 to 2500, or 800 to 1500. Preferred are polypropenyl, polybutenyl and polyisobutenyl radicals, for example with a number-average molecular weight Mₙ of 3500 to 5000, 350 to 3000, 500 to 2500, 700 to 2500 and 800 to 1500 g/mol.

Preferred examples of anions A⁻ are the anions of acetic acid, propionic acid, butyric acid, 2-ethylhexanoic acid, trimethylhexanoic acid, 2-propylheptanoic acid, isononanoic acid, versatic acids, decanoic acid, undecanoic acid, dodecanoic acid, saturated or unsaturated fatty acids with 12 to 24 carbon atoms, or mixtures thereof, salicylic acid, oxalic acid mono-C₁-C₄-alkyl ester, phthalic acid mono-C₁-C₄-alkyl ester, C₁₂-C₁₀₀-alkyl- and -alkenyl succinic acid, especially dodecenyl succinic acid, hexadecenyl succinic acid, eicosenyl succinic acid, and polyisobutenyl succinic acid. Further examples are methyl carbonate, ethyl carbonate, n-butyl carbonate, 2-hydroxyethyl carbonate, and 2-hydroxypropyl carbonate.

In one preferred embodiment the nitrogen compounds quaternized in the presence of an acid or in an acid-free manner are obtainable by addition of a compound which comprises at least one oxygen- or nitrogen-containing group reactive with an anhydride and additionally at least one quaternizable amino group onto a polycarboxylic anhydride compound and subsequent quaternization, especially with an epoxide, e.g. styrene or propylene oxide, in the absence of free acid, as described in WO 2012/004300, or with a carboxylic ester, e.g. dimethyl oxalate or methyl salicylate. Suitable compounds having at least one oxygen- or nitrogen-containing group reactive with anhydride and additionally at least one quaternizable amino group are especially polyamines having at least one primary or secondary amino group and at least one tertiary amino group, especially N,N-dimethyl-1,3-propane diamine, N,N-dimethyl-1,2-ethane diamine or N,N, N'-trimethyl-1,2-ethane diamine. Useful polycarboxylic anhydrides are especially dicarboxylic acids such as succinic acid, having a relatively long-chain hydrocarbyl substituent, preferably having a number-average molecular weight Mₙ for the hydrocarbyl substituent of 200 to 10.000, in particular of 350 to 5000. Such a quaternized nitrogen compound is, for example, the reaction product, obtained at 40°C, of polyisobutenylsuccinic anhydride, in which the polyisobutenyl radical typically has an Mₙ of 1000, with 3-(dimethylamino)propylamine, which constitutes a polyisobutenylsuccinic monoamide and which is subsequently quaternized with dimethyl oxalate or methyl salicylate or with styrene oxide or propylene oxide in the absence of free acid.

Further quaternized nitrogen compounds suitable as compounds (H) are described in
WO 2006/135881 A1, page 5, line 13 to page 12, line 14;
WO 10/132259 A1, page 3, line 28 to page 10, line 25;
WO 2008/060888 A2, page 6, line 15 to page 14, line 29;
WO 2011/095819 A1, page 4, line 5 to page 9, line 29;
GB 2496514 A, paragraph [00012] to paragraph [00041];
WO 2013/117616 A1, page 3, line 34 to page 11, line 2;
WO 14/202425 A2, page 3, line 14 to page 5, line 9;
WO 14/195464 A1, page 15, line 31 to page 45, line 26 and page 75, lines 1 to 4;
WO 15/040147 A1, page 4, line 34 to page 5, line 18 and page 19, line 11 to page 50, line 10;
WO 14/064151 A1, page 5, line 14 to page 6, line 17 and page 16, line 10 to page 18, line 12;
WO 2013/064689 A1, page 18, line 16 to page 29, line 8; and
WO 2013/087701 A1, page 13, line 25 to page 19, line 30,
WO 13/000997 A1, page 17, line 4 to page 25, line 3,
WO 12/004300, page 5, lines 20 to 30, page 8, line 1 to page 10, line 10, and page 19, line 29 to page 28, line 3,
each of which is incorporated herein by reference.

In one embodiment the quaternized ammonium compound (H) is of formula 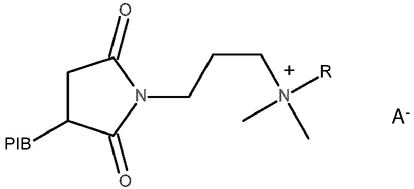 wherein in this formula
PIB stands for a polyisobutenyl residue having a number average molecular weight Mₙ of from 550 to 2300, preferably from 650 to 1500 and more preferably from 750 to 1300 g/mol,
R stands for an C₁- to C₄-alkyl or hydroxy-C₁- to C₄-alkyl, preferably methyl or 2-hydroxypropyl, and
A⁻ stands for an anion, preferably carboxylate R⁵COO⁻ or a carbonate R⁵O-COO⁻ as defined above, more preferably acetate, salicylate or methyloxalate.

In another preferred embodiment the quaternized ammonium compound (H) is of formula 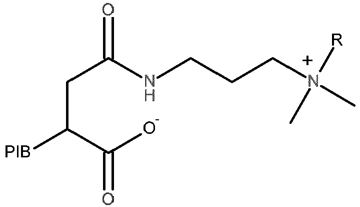 wherein in this formula
PIB stands for a polyisobutenyl residue having a number average molecular weight Mₙ of from 550 to 2300, preferably from 650 to 1500 and more preferably from 750 to 1300 g/mol,
R stands for a hydroxy-C₁- to C₄-alkyl, preferably 2-hydroxypropyl.

In another embodiment the quaternized compound (H) is of formula 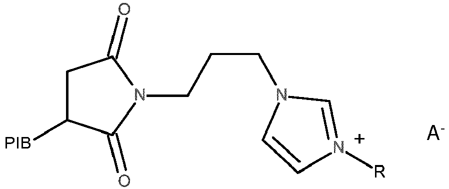 wherein in this formula
PIB stands for a polyisobutenyl residue having a number average molecular weight Mₙ of from 550 to 2300, preferably from 650 to 1500 and more preferably from 750 to 1300 g/mol, R stands for an C₁- to C₄-alkyl or hydroxy-C₁- to C₄-alkyl, preferably methyl, and
A⁻ stands for an anion, preferably carboxylate R⁵COO⁻ or a carbonate R⁵O-COO⁻ as defined above, more preferably salicylate or methyloxalate.

In another embodiment the quaternized ammonium compound (H) is of formula 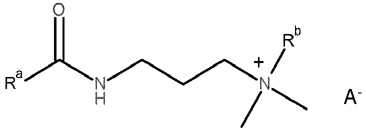 wherein in this formula
R^{a} stands for C₁-C₂₀-alkyl, preferably C₉- to C₁₇-alkyl, more preferably for undecyl, tridecyl, pentadecyl or heptadecyl,
R^{b} stands for a hydroxy-C₁- to C₄-alkyl, preferably 2-hydroxypropyl or 2-hydroxybutyl, and
A stands for an anion, preferably carboxylate R⁵COO⁻, as defined above, more preferably R⁵COO⁻ being a carboxylate of a fatty acid, especially A being acetate, 2-ethylhexanoate, ole-ate or polyisobutenyl succinate.

In one embodiment the quaternized ammonium compound (H) is of formula 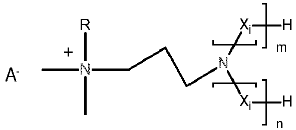 wherein in this formula
Xᵢ for i = 1 to n and 1 to m are independently of another selected from the group consisting of - CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O- and -CH(CH₃)-CH(CH₃)-O-, preferably selected from the group consisting of -CH₂-CH(CH₃)-O-, -CH(CH₃)-CH₂-O-, -CH₂-C(CH₃)₂-O-, -C(CH₃)₂-CH₂-O-, -CH₂-CH(C₂H₅)-O-, -CH(C₂H₅)-CH₂-O- and -CH(CH₃)-CH(CH₃)-O-, more preferably selected from the group consisting of -CH₂-CH(CH₃)-O-, -CH(CH₃)-CH₂-O-, -CH₂-C(CH₃)₂-O-, -C(CH₃)₂-CH₂-O-, - CH₂-CH(C₂H₅)-O- and -CH(C₂H₅)-CH₂-O-, most preferably selected from the group consisting of -CH₂-CH(C₂H₅)-O-, -CH(C₂H₅)-CH₂-O-, -CH₂-CH(CH₃)-O- and -CH(CH₃)-CH₂-O-, and especially selected from the group consisting of -CH₂-CH(CH₃)-O- and -CH(CH₃)-CH₂-O-,
m and n independently of another are positive integers, with the proviso that the sum (m + n) is from 2 to 50, preferably from 5 to 40, more preferably from 10 to 30, and especially from 15 to 25,
R stands for an C₁- to C₄-alkyl, preferably methyl, and
A⁻ stands for an anion, preferably carboxylate R⁵COO⁻ or a carbonate R⁵O-COO⁻ as defined above, more preferably salicylate or methyloxalate.

In another preferred embodiment the quaternized ammonium compound (H) is of formula 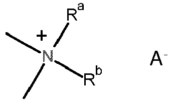 wherein in this formula
R^{a} and R^{b} independently of another stand for C₁-C₂₀-alkyl or hydroxy-C₁- to C₄-alkyl, preferably R^{a} stands for C₁-C₂₀-alkyl, preferably ethyl, n-butyl, n-octyl, n-dodecyl, tetradecyl or hexadecyl, and R^{b} stands for hydroxy-C₁- to C₄-alkyl, preferably 2-hydroxypropyl,
A⁻ stands for an anion, preferably carboxylate R⁵COO⁻ or a carbonate R⁵O-COO⁻ as defined above, more preferably C₁₂-C₁₀₀-alkyl- and -alkenyl succinic acid, especially dodecenyl succinic acid, hexadecenyl succinic acid, eicosenyl succinic acid, and polyisobutenyl succinic acid.

The at least one antistatic agent is added to the fuel in an amount so that the electrical conductivity according to ASTM 2624 of the fuel (absent any other additives) is raised to 30 to 1000 pS/m, preferably from 40 to 900 pS/m, more preferably from 50 to 800 pS/m and especially from 60 to 700 pS/m.

Such electrical conductivity is much higher than usually necessary for antistatic activity, however, in these amounts the at least one antistatic agent takes full effect as cold flow improver.

In order to achieve the above-mentioned electrical conductivity the at least one antistatic agent is typically added to the fuels so that the middle distillate fuels comprise the antistatic agent in an amount of typically 0.5 to 150 ppm by weight, preferably of 1 to 125 ppm by weight, especially of 3 to 100 ppm by weight and in particular of 3 to 75 ppm by weight.

### Fuels

In the context of the present invention, fuel oils shall be understood to mean middle distillate fuels of fossil, vegetable or animal origin, biofuel oils ("biodiesel") and mixtures of such middle distillate fuels and biofuel oils.

Middle distillate fuels (also called "middle distillates" for short hereinafter) are especially understood to mean fuels which are obtained by distilling crude oil as the first process step and boil within the range from 120 to 450°C. Such middle distillate fuels are used especially as diesel fuel, heating oil or kerosene, particular preference being given to diesel fuel and heating oil. Preference is given to using low-sulfur middle distillates, i.e. those which comprise less than 350 ppm of sulfur, especially less than 200 ppm of sulfur, in particular less than 50 ppm of sulfur. In special cases they comprise less than 10 ppm of sulfur; these middle distillates are also referred to as "sulfur-free". They are generally crude oil distillates which have been subjected to refining under hydrogenating conditions and therefore comprise only small proportions of polyaromatic and polar compounds. They are preferably those middle distillates which have 90% distillation points below 370°C, especially below 360°C and in special cases below 330°C.

Low-sulfur and sulfur-free middle distillates may also be obtained from relatively heavy mineral oil fractions which cannot be distilled under atmospheric pressure. Typical conversion processes for preparing middle distillates from heavy crude oil fractions include: hydrocracking, thermal cracking, catalytic cracking, coking processes and/or visbreaking. Depending on the process, these middle distillates are obtained in low-sulfur or sulfur-free form, or are subjected to refining under hydrogenating conditions.

The middle distillates preferably have aromatics contents of below 28% by weight, especially below 20% by weight. The content of normal paraffins is between 5% by weight and 50% by weight, preferably between 10 and 35% by weight.

In the context of the present invention, middle distillate fuels shall also be understood here to mean those fuels which can either be derived indirectly from fossil sources such as mineral oil or natural gas, or else are produced from biomass via gasification and subsequent hydrogenation. A typical example of a middle distillate fuel which is derived indirectly from fossil sources is the GTL ("gas-to-liquid") diesel fuel obtained by means of Fischer-Tropsch synthesis. A middle distillate is prepared from biomass, for example, via the BTL ("biomass-to-liquid") process, and can be used as fuel either alone or in a mixture with other middle distillates. The middle distillates also include hydrocarbons which are obtained by the hydrogenation of fats and fatty oils. They comprise predominantly n-paraffins.

The qualities of the heating oils and diesel fuels are laid down in more detail, for example, in DIN 51603 and EN 590 (cf. also Ullmann's Encyclopedia of Industrial Chemistry, 5th edition, volume A12, p. 617 ff.).

In a preferred embodiment the fuel is a diesel fuel (absent any additives) with a CP value according to ASTM D2500/ASTM D97 of 0 to -15 °C, preferably 0 to -10 °C, and more preferably -5 to -10 °C and/or, preferably and with a content of n-paraffines of from 10 to 27 % by weight, more preferably of from 15 to 25 % by weight, and most preferably from 17 to 23 % by weight.

In addition to its use in the middle distillate fuels of fossil, vegetable or animal origin mentioned, which are essentially hydrocarbon mixtures, the inventive copolymer can also be used in biofuel oils and in mixtures of the middle distillates mentioned with biofuel oils, in order to improve cold flow characteristics. Mixtures of this kind are commercially available and usually comprise the biofuel oils in minor amounts, typically in amounts of 1% to 30% by weight, especially of 3% to 10% by weight, based on the total amount of middle distillate of fossil, vegetable or animal origin and biofuel oil.

Biofuel oils are generally based on fatty acid esters, preferably essentially on alkyl esters of fatty acids which derive from vegetable and/or animal oils and/or fats. Alkyl esters are preferably understood to mean lower alkyl esters, especially C₁- to C₄-alkyl esters, which are obtainable by transesterifying the glycerides which occur in vegetable and/or animal oils and/or fats, especially triglycerides, by means of lower alcohols, for example ethanol or in particular methanol ("FAME"). Typical lower alkyl esters which are based on vegetable and/or animal oils and/or fats and find use as a biofuel oil or components thereof are, for example, HVO (hydrogenated vegetable oil), sunflower methyl ester, palm oil methyl ester ("PME"), soya oil methyl ester ("SME") and especially rapeseed oil methyl ester ("RME").

The compositions according to the present invention comprise copolymer (I) and antistatic agent (II) in a weight ratio of from 1 : 0.01 to 10, preferably from 1 : 0.02 to 5, more preferably from 1 : 0.05 to 3.

Preferably the composition may further comprise at least one cold flow improver in a weight ratio referring to copolymer (I) of from 1 : 0.01 to 10, preferably from 1 : 0.02 to 5, more preferably from 1 : 0.05 to 3.

The composition is usually added to the middle distillate fuels in amounts of 10 to 5000 ppm by weight.

It is possible, through the use of the inventive compositions, to improve a number of fuel properties. Mention shall be made here by way of example merely of the additional effect as a cloud point depressant (CPD) or as a booster together with a flow improver for further improvement of the CFPP.

The inventive compositions can be added either to middle distillate fuels entirely of fossil origin, i.e. those that have been obtained from mineral oil, or to fuels which, as well as the proportion based on mineral oil, comprise a proportion of biodiesel, in order to improve the properties thereof. In both cases, a distinct improvement in the cold flow characteristics of the middle distillate fuel is observed, i.e. a lowering of the CP values and/or CFPP values, irrespective of the origin or the composition of the fuel. The paraffin crystals which precipitate out are effectively kept suspended, and so there are no blockages of filters and lines by sedimented paraffin. The inventive copolymers have a good activity spectrum and thus achieve very good dispersion of the paraffin crystals which precipitate out in a wide variety of different middle distillate fuels.

The present invention also provides fuels, especially those with a biodiesel content, comprising the inventive compositions.

In general, the fuels or fuel additive concentrates also comprise, as further additives in amounts customary therefor, flow improvers (as described above), further paraffin dispersants, conductivity improvers, anticorrosion additives, lubricity additives, antioxidants, metal deactivators, antifoams, demulsifiers, detergents, cetane number improvers, solvents or diluents, dyes or fragrances or mixtures thereof. The aforementioned further additives are familiar to those skilled in the art and therefore need not be explained any further here.

The other further additives mentioned above are, incidentally, familiar to those skilled in the art and therefore need not be elucidated here any further.

The examples which follow are intended to elucidate the present invention without restricting it.

### Examples

### Components

Component 1: Copolymer of maleic anhydride and dodecene reacted with 1.4 equivalents of distearylamine per anhydride moiety in the copolymer as described in preparation example 1 of WO 2017/202642 A1 with a weight average molecular weight M_{w} of 5000 g/mol.

Component 2: Mixture of Component 1, reaction product of maleic anhydride and tridecylamine according to Example 2 of WO 00/23541, and phenol-formaldehyde resin (Mw 2600 g/mol) in a weight ratio of approx. 70 : 10 : 20.

Component 3: 1-decene-sulfur dioxide copolymer obtainable as described in Example 2 of WO 2008/107371 A2. Number average molecular weight Mn 18000 g/mol, weight average molecular weight Mn 110000 g/mol, polydispersity approx. 6.0.

Component 4: Mixture of Component 3 and Component 6

Component 5: Ethylenediaminetetraacetic acid reacted with 4 mol of distearyl amine, prepared in Solvent Naphtha as described in example 1 of WO 00/23541.

Component 6: 4-(tridecan-3-yl) benzene sulfonic acid

Component 7: Acid-free quaternized succinimide made of polyisobutene succinic anhydride and 3-(dimethylamino) propylamine quaternised with propylene oxide rather than styrene oxide in an analogous matter to Preparation Example 1 of WO 2012/004300 A1.

### Tests

The cloud point (CP) to ISO 3015 and the CFPP to EN 116 of the additized fuel samples were determined. For this purpose, the additized fuel samples in 500 ml glass cylinders, in order to determine the delta CP, were cooled to -13 °C in a cold bath and stored at this temperature for 16 hours. For each sample, the CP was again determined to ISO 3015 on the 20% by volume base phase separated off at -13 °C.

The smaller the deviation of the CP of the 20% by volume base phase from the original CP (delta CP) for the respective fuel sample, the better the dispersion of the paraffins.

The smaller the delta CP and the lower the CFPP, the better the cold flow characteristics of a diesel fuel.

The procedure for the brief sediment test was according to Aral Method QSAA FKL 027.

WASA formulations comprise 25% by weight of the particular copolymer.

The MDFI components MDFI1, MDFI2, and MDFI3 used are commercially available flow improver formulation of an ethylene/vinyl acetate copolymer with a number average molecular weight Mn of 2500, 60 wt% in aromatic hydrocarbon solvent (MDFI1), Mn 3400, 60 wt% in aromatic hydrocarbon solvent (MDFI2), resp. Mn 2500 g/mol, 70 wt% in aliphatic hydrocarbon solvent (MDFI3).

### Fuels

Physical and chemical properties and Distillation Curve according to ASTM D86

| | Origin | Cloud Point [°C] | Density at 15 °C [kg/m³] | 90 Vol% - 20 Vol% [°C] | Initial Boiling Point [°C] | Final Boiling Point [°C] | Content n-paraffines [wt%] |
|---|---|---|---|---|---|---|---|
| Fuel 1 | Diesel, middle Europe | -7.5 | 829.2 | 123 | 175 | 351 | 21.58 |
| Fuel 2 | Diesel, middle Europe | -9.1 | 833 | 119 | 172 | 353 | 19.58 |
| Fuel 3 | Diesel, middle Europe | -5.4 | 840.5 | 116 | 170 | 358 | 18.78 |
| Fuel 4 | Diesel, middle Europe | -8.5 | 835.2 | 113 | 166 | 359 | 21.48 |
| Fuel 5 | Diesel, middle Europe | -7.9 | 831.7 | 118 | 178 | 350 | 20.95 |
| Fuel 6 | Diesel, middle Europe | -6 | 840.2 | 113 | 157 | 361 | 22.0 |

### Examples

### Example 1

Fuel 1 was additized with 100 ppm MDFI1 and additionally as stated in Table 1:

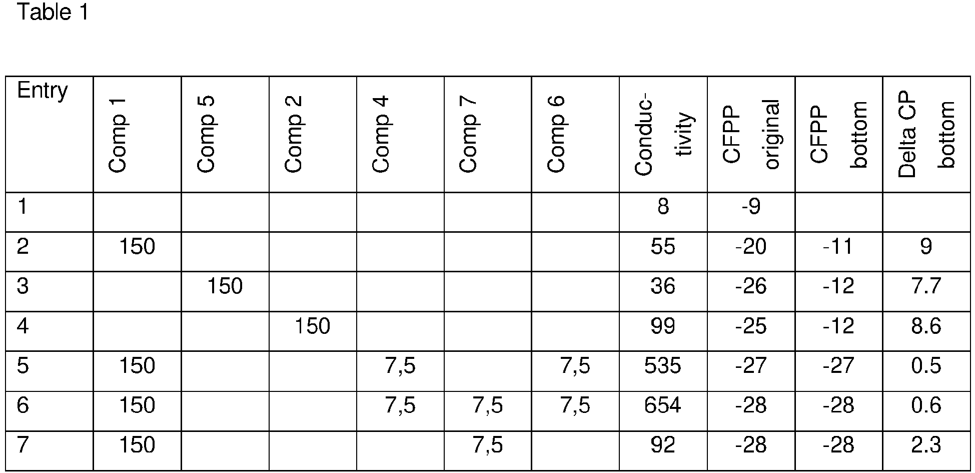

Entry 1 is the fuel without further additives, entries 2 to 4 are comparative and entries 5 to 7 are according to the invention.

### Example 2

Fuel 2 was additized with 100 ppm MDFI3 and additionally as stated in Table 2:

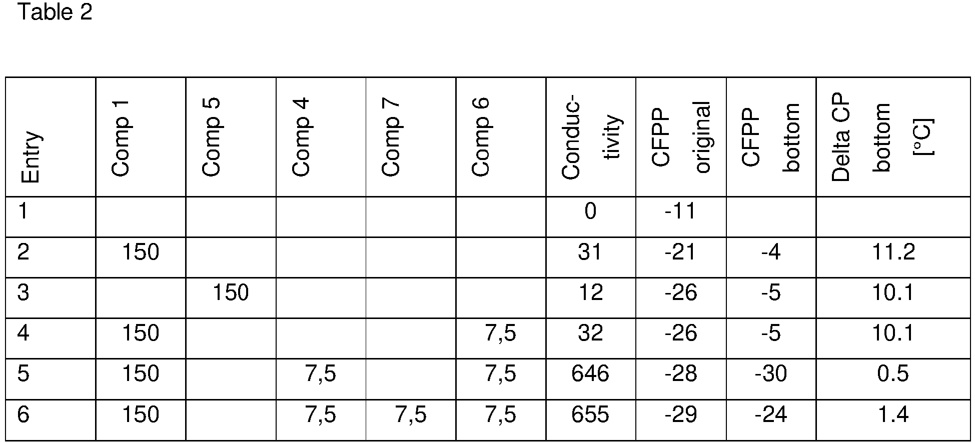

Entry 1 is the fuel without further additives, entries 2 to 5 are comparative and entries 6 and 7 are according to the invention.

### Example 3

Fuel 3 was additized with 150 ppm MDFI2 and additionally as stated in Table 3:

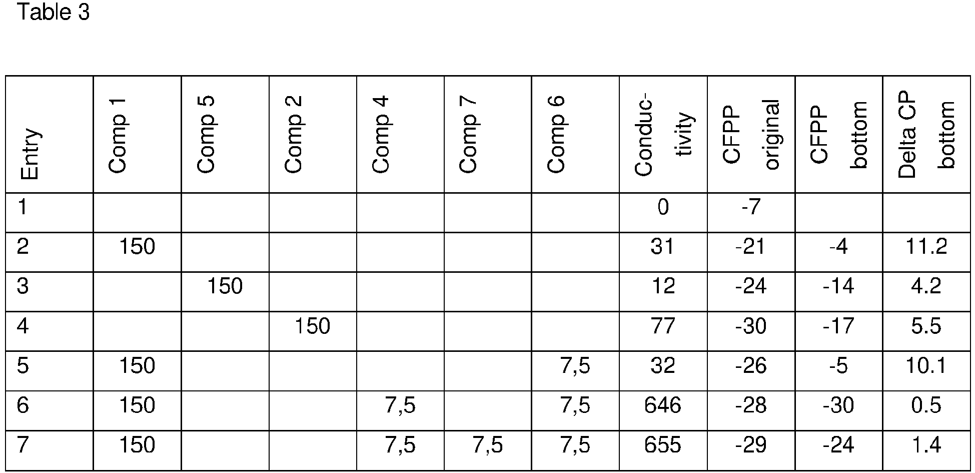

Entry 1 is the fuel without further additives, entries 2 to 5 are comparative and entries 6 and 7 are according to the invention.

## Claims

1. A composition for reducing the crystallization of paraffin crystals in fuels comprising
(I) a copolymer obtainable by copolymerization of
(A) at least one unsaturated dicarboxylic acid or derivatives thereof, wherein the derivatives are selected from the group consisting of
- anhydrides,
- mono- or dialkyl esters,
- mixed esters, and
- mono- and diamides, and imides,
of unsaturated dicarboxylic acids,
(B) at least one α-olefin having from at least 6 up to and including 20 carbon atoms,
(C) optionally at least one C₃- to C₂₀-alkyl ester of acrylic acid or methacrylic acid or a mixture of such alkyl esters and
(D) optionally one or more further copolymerizable monomers other than monomers (A), (B) and (C),
followed by the reaction with at least one dialkylamine (E), where the two alkyl radicals in the at least one dialkylamine (E) are independently alkyl radicals having at least 17 up to 30 carbon atoms
and
(II) at least one antistatic agent, selected from the group consisting of
(F) copolymers of sulfur dioxide with one or more linear or branched 1-olefins having from 2 to 24 carbon atoms,
(F1) at least one further component comprising one or more basic nitrogen atoms and having at least one relatively long-chain linear or branched hydrocarbon radical having at least four carbon atoms or an equivalent structural element which ensures the solubility of component (F) in the fuel,
wherein component (F1) is a reaction product of oligoethyleneamines or oligoethyleneimines with olefin-maleic anhydride copolymers derivatized with amines or polyamines, (G) organic sulfonic acids which have a hydrocarbyl radical having from 6 to 40 carbon atoms, and
(H) quaternary nitrogen components of the formula
⁺NR¹R²R³R⁴ A⁻
in which
A⁻ stands for an anion, preferably a carboxylate R⁵COO⁻ or a carbonate R⁵O-COO⁻,
and
R¹, R², R³, R⁴, and R⁵ independently of another are an organic residue with from 1 to 100 carbon atoms, substituted or unsubstituted, preferably unsubstituted, linear or branched alkyl, alkenyl or hydroxyalkyl residue with 1 to 100, more preferably 1 to 75, even more preferably 1 to 30, most preferably 1 to 25 and especially 1 to 20 carbon atoms,
R⁵ additionally may be substituted or unsubstituted cycloalkyl or aryl residues bearing 5 to 20, preferably 5 to 12 carbon atoms,
wherein the weight ratio of copolymer (I) and antistatic agent (II) is from 1 : 0.01 to 10, preferably from 1 : 0.02 to 5, more preferably from 1 : 0.05 to 3.

2. A composition according to claim 1, wherein monomer (A) is selected from the group consisting of maleic acid, fumaric acid, 2-methylmaleic acid, 2,3-dimethylmaleic acid, 2-methylfumaric acid, 2,3-dimethylfumaric acid, methylenemalonic acid and tetrahydrophthalic acid and derivatives thereof.

3. A composition according to claim 1 or 2, wherein monomer (B) is selected from the group consisting of 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene.

4. The composition according to any of the preceding claims, wherein monomer (C) is present and selected from the group consisting of esters of acrylic acid and methacrylic acid with n-propanol, isopropanol, n-butanol, sec-butanol, isobutanol, tert-butanol, n-pentanol, tert-pentanol, n-hexanol, n-heptanol, n-octanol, 2-ethylhexanol, n-nonanol, isononanol, n-decanol, 2-propylheptanol, n-undecanol, isoundecanol, n-dodecanol, n-tridecanol, isotridecanol, 3,3,5,5,7-pentamethyloctanol, n-tetradecanol, n-pentadecanol, n-hexadecanol, n-heptadecanol, isoheptadecanol, 3,3,5,5,7,7,9-heptamethyldecanol, n-octadecanol and n-eicosanol.

5. The composition according to any of the preceding claims, wherein the monomer (D) is present and selected from the group consisting of cycloaliphatic (meth)acrylates (D1), (meth)acrylates of polyalkylene glycol monoalkyl ethers (D2), vinyl alkanoates (D3), allyl compounds (D4), vinyl ethers (D5), N-vinyllactams (D6), N-vinylimidazoles (D7), ethylenically unsaturated aromatics (D8), sulfur dioxide (D9), ethylenically unsaturated nitriles (D10) and esters of acrylic acid or methacrylic acid that bear at least one aromatic ring system (D11).

6. The composition according to any of claims 1 to 3, wherein monomer (A) is maleic anhydride and neither monomer (C) nor monomer (D) is present in the copolymer.

7. The composition according to any of the preceding claims, wherein the dialkylamine (E) is di-n-octadecylamine, di-n-nonadecylamine or di-n-eicosylamine.

8. The composition according to any of the preceding claims, wherein the molar ratio of dialkylamine (E) based on incorporated units of the dicarboxylic acid (A) in the copolymer is at least 1.2:1 and up to 2.0:1.

9. The composition according to any of the preceding claims, wherein component (F) is a copolymer of sulfur dioxide with one or more linear or branched 1-olefins having from 2 to 24 carbon atoms.

10. The composition according to any of the preceding claims, wherein component (F1) is obtainable by free-radical polymerization of one or more linear or branched α-olefins having from 6 to 50 carbon atoms with maleic anhydride and subsequent reaction with one or more aliphatic polyamines.

11. The composition according to any of the preceding claims, wherein component (G) is an organic sulfonic acid which has a hydrocarbyl radical, preferably an aromatic or aliphatically substituted aromatic radical, having from 6 to 40 carbon atoms.

12. The composition according to any of the preceding claims, wherein component (H) is a nitrogen compound quaternized in the presence of an acid or in an acid-free manner.

13. The composition according to any of the preceding claims, wherein the antistatic agent (II) is a mixture of
(F) at least one copolymer of sulfur dioxide with one or more linear or branched 1-olefins having from 2 to 24 carbon atoms and
(G) at least one organic sulfonic acid which have a hydrocarbyl radical having from 6 to 40 carbon atoms.

14. The composition according to any of the claims 1 to 12, wherein the antistatic agent (II) is a mixture of
(F) at least one copolymer of sulfur dioxide with one or more linear or branched 1-olefins having from 2 to 24 carbon atoms, and (F1) at least one further component comprising one or more basic nitrogen atoms and having at least one relatively long-chain linear or branched hydrocarbon radical having at least four carbon atoms or an equivalent structural element which ensures the solubility of component (F) in the fuel, wherein component (F1) is a reaction product of oligoethyleneamines or oligoethyleneimines with olefin-maleic anhydride copolymers derivatized with amines or polyamines, and
(G) at least one organic sulfonic acid which have a hydrocarbyl radical having from 6 to 40 carbon atoms.

15. The composition according to any of the claims 1 to 12, wherein the antistatic agent (II) is (H) at least one quaternary nitrogen component.

16. The use of the composition according to any of claims 1 to 15 for reducing the crystallization of paraffin crystals in fuels.

17. The use of the composition according to any of claims 1 to 15 for improving the cold flow properties of fuel oils and/or for improving the filterability of fuel oils comprising cold flow improver additives.

18. A fuel oil comprising 10 to 5000 ppm by weight of at least one composition according to any of claims 1 to 15 and additionally optionally further additives selected from the group consisting of cold flow improvers, paraffin dispersants, conductivity improvers, anticorrosion additives, lubricity additives, antioxidants, metal deactivators, antifoams, demulsifiers, detergents, cetane number improvers, solvents or diluents, dyes and fragrances.

19. A fuel oil according to claim 18, wherein the fuel is a diesel fuel (absent any additives) with a CP value according to ASTM D2500/ASTM D97 of 0 to -15 °C and/or with a content of paraffines of from 10 to 27 % by weight.

## Patentansprüche

1. Zusammensetzung zum Verringern der Kristallisation von Paraffinkristallen in Brennstoffen, umfassend
(I) ein Copolymer, erhältlich durch Copolymerisation von
(A) wenigstens einer ungesättigten Dicarbonsäure oder Derivaten davon, wobei die Derivate ausgewählt sind aus der Gruppe bestehend aus
- Anhydriden,
- Mono- oder Dialkylestern,
- gemischten Estern und
- Mono- und Diamiden und Imiden von ungesättigten Dicarbonsäuren,
(B) wenigstens einem α-Olefin mit von wenigstens 6 bis zu und einschließlich 20 Kohlenstoffatomen,
(C) gegebenenfalls wenigstens einem C₃- bis C₂₀-Alkylester von Acrylsäure oder Methacrylsäure, oder einem Gemisch von derartigen Alkylestern, und
(D) gegebenenfalls einem oder mehreren weiteren copolymerisierbaren Monomeren, die von den Monomeren (A), (B) und (C) verschieden sind, gefolgt von Umsetzung mit wenigstens einem Dialkylamin (E), wobei die beiden Alkylreste in dem wenigstens einen Dialkylamin (E) unabhängig Alkylreste mit wenigstens 17 und bis zu 30 Kohlenstoffatomen sind,
und
(II) wenigstens ein antistatisches Mittel ausgewählt aus der Gruppe bestehend aus
(F) Copolymeren von Schwefeldioxid mit einem oder mehreren linearen oder verzweigten 1-Olefinen mit von 2 bis 24 Kohlenstoffatomen,
(F1) wenigstens einer weiteren Komponente, die ein oder mehrere basische Stickstoffatome umfasst und wenigstens einen vergleichsweise langkettigen linearen oder verzweigten Kohlenwasserstoffrest mit wenigstens vier Kohlenstoffatomen oder ein äquivalentes Strukturelement, das die Löslichkeit der Komponente (F) in dem Brennstoff gewährleistet, aufweist,
wobei die Komponente (F1) ein Reaktionsprodukt von Oligoethylenaminen oder Oligoethyleniminen mit Olefin-Maleinsäureanhydrid-Copolymeren, die mit Aminen oder Polyaminen derivatisiert sind, ist,
(G) organischen Sulfonsäuren, die einen Hydrocarbylrest mit von 6 bis 40 Kohlenstoffatomen aufweisen, und
(H) quaternären Stickstoffkomponenten der Formel
⁺NR¹R²R³R⁴ A⁻,
wobei
A⁻ für ein Anion steht, vorzugsweise ein Carboxylat R⁵COO⁻ oder ein Carbonat R⁵O-COO⁻,
und
R¹, R², R³, R⁴ und R⁵ unabhängig voneinander ein organischer Rest mit von 1 bis 100 Kohlenstoffatomen sind, substituiert oder unsubstituiert, vorzugsweise ein unsubstituierter, linearer oder verzweigter Alkyl-, Alkenyl- oder Hydroxyalkylrest mit 1 bis 100, bevorzugter 1 bis 75, noch bevorzugter 1 bis 30, höchst bevorzugt 1 bis 25 und insbesondere 1 bis 20 Kohlenstoffatomen,
R⁵ zusätzlich ein substituierter oder unsubstituierter Cycloalkyl- oder Arylrest mit 5 bis 20, vorzugsweise 5 bis 12, Kohlenstoffatomen sein kann,
wobei das Gewichtsverhältnis von Copolymer (I) und antistatischem Mittel (II) von 1:0,01 bis 10, vorzugsweise von 1:0,02 bis 5, bevorzugter von 1:0,05 bis 3, beträgt.

2. Zusammensetzung gemäß Anspruch 1, wobei Monomer (A) ausgewählt ist aus der Gruppe bestehend aus Maleinsäure, Fumarsäure, 2-Methylmaleinsäure, 2,3-Dimethylmaleinsäure, 2-Methylfumarsäure, 2,3-Dimethylfumarsäure, Methylenmalonsäure und Tetrahydrophthalsäure und Derivaten davon.

3. Zusammensetzung gemäß Anspruch 1 oder 2, wobei Monomer (B) ausgewählt ist aus der Gruppe bestehend aus 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Nonadecen und 1-Eicosen.

4. Zusammensetzung gemäß einem der vorstehenden Ansprüche, wobei Monomer (C) vorhanden und ausgewählt ist aus der Gruppe bestehend aus Estern von Acrylsäure und Methacrylsäure mit n-Propanol, Isopropanol, n-Butanol, sec-Butanol, Isobutanol, tert-Butanol, n-Pentanol, tert-Pentanol, n-Hexanol, n-Heptanol, n-Octanol, 2-Ethylhexanol, n-Nonanol, Isononanol, n-Decanol, 2-Propylheptanol, n-Undecanol, Isoundecanol, n-Dodecanol, n-Tridecanol, Isotridecanol, 3,3,5,5,7-Pentamethyloctanol, n-Tetradecanol, n-Pentadecanol, n-Hexadecanol, n-Heptadecanol, Isoheptadecanol, 3,3,5,5,7,7,9-Heptamethyldecanol, n-Octadecanol und n-Eicosanol.

5. Zusammensetzung gemäß einem der vorstehenden Ansprüche, wobei das Monomer (D) vorhanden und ausgewählt ist aus der Gruppe bestehend aus cycloaliphatischen (Meth)acrylaten (D1), (Meth)acrylaten von Polyalkylenglycolmonoalkylethern (D2), Vinylalkanoaten (D3), Allylverbindungen (D4), Vinylethern (D5), N-Vinyllactamen (D6), N-Vinylimidazolen (D7), ethylenisch ungesättigten Aromaten (D8), Schwefeldioxid (D9), ethylenisch ungesättigten Nitrilen (D10) und Estern von Acrylsäure oder Methacrylsäure, die wenigstens ein aromatisches Ringsystem tragen (D11).

6. Zusammensetzung gemäß einem der Ansprüche 1 bis 3, wobei das Monomer (A) Maleinsäureanhydrid ist und weder Monomer (C) noch Monomer (D) in dem Copolymer vorhanden sind.

7. Zusammensetzung gemäß einem der vorstehenden Ansprüche, wobei das Dialkylamin (E) Di-n-octadecylamin, Di-n-nonadecylamin oder Di-n-eicosylamin ist.

8. Zusammensetzung gemäß einem der vorstehenden Ansprüche, wobei das Molverhältnis von Dialkylamin (E) zu einverleibten Einheiten der Dicarbonsäure (A) in dem Copolymer wenigstens 1,2:1 und bis zu 2,0:1 beträgt.

9. Zusammensetzung gemäß einem der vorstehenden Ansprüche, wobei die Komponente (F) ein Copolymer von Schwefeldioxid mit einem oder mehreren linearen oder verzweigten 1-Olefinen mit von 2 bis 24 Kohlenstoffatomen ist.

10. Zusammensetzung gemäß einem der vorstehenden Ansprüche, wobei die Komponente (F1) durch radikalische Polymerisation von einem oder mehreren linearen oder verzweigten α-Olefinen mit von 6 bis 50 Kohlenstoffatomen mit Maleinsäureanhydrid und anschließende Umsetzung mit einem oder mehreren aliphatischen Polyaminen erhältlich ist.

11. Zusammensetzung gemäß einem der vorstehenden Ansprüche, wobei die Komponente (G) eine organische Sulfonsäure ist, die einen Hydrocarbylrest, vorzugsweise einen aromatisch oder aliphatisch substituierten aromatischen Rest, mit von 6 bis 40 Kohlenstoffatomen aufweist.

12. Zusammensetzung gemäß einem der vorstehenden Ansprüche, wobei die Komponente (H) eine Stickstoffverbindung ist, die in Gegenwart einer Säure oder auf eine säurefreie Weise quanternisiert ist.

13. Zusammensetzung gemäß einem der vorstehenden Ansprüche, wobei das antistatische Mittel (II) ein Gemisch ist von
(F) wenigstens einen Copolymer von Schwefeldioxid mit einem oder mehreren linearen oder verzweigten 1-Olefinen mit von 2 bis 24 Kohlenstoffatomen und
(G) wenigstens einer organischen Sulfonsäure, die einen Hydrocarbylrest mit von 6 bis 40 Kohlenstoffatomen aufweist.

14. Zusammensetzung gemäß einem der Ansprüche 1 bis 12, wobei das antistatische Mittel (II) ein Gemisch ist von (F) wenigstens einen Copolymer von Schwefeldioxid mit einem oder mehreren linearen oder verzweigten 1-Olefinen mit von 2 bis 24 Kohlenstoffatomen und
(F1) wenigstens einer weiteren Komponente, die ein oder mehrere basische Stickstoffatome umfasst und wenigstens einen vergleichsweise langkettigen linearen oder verzweigten Kohlenwasserstoffrest mit wenigstens vier Kohlenstoffatomen oder ein äquivalentes Strukturelement, das die Löslichkeit der Komponente (F) in dem Brennstoff gewährleistet, aufweist,
wobei die Komponente (F1) ein Reaktionsprodukt von Oligoethylenaminen oder Oligoethyleniminen mit Olefin-Maleinsäureanhydrid-Copolymeren, die mit Aminen oder Polyaminen derivatisiert sind, ist, und
(G) wenigstens einer organischen Sulfonsäure, die einen Hydrocarbylrest mit von 6 bis 40 Kohlenstoffatomen aufweist.

15. Zusammensetzung gemäß einem der Ansprüche 1 bis 12, wobei das antistatische Mittel (II) ist: (H) wenigstens eine quaternäre Stickstoffkomponente.

16. Verwendung der Zusammensetzung gemäß einem der Ansprüche 1 bis 15 zum Verringern der Kristallisation von Paraffinkristallen in Brennstoffen.

17. Verwendung der Zusammensetzung gemäß einem der Ansprüche 1 bis 15 zum Verbessern der Kaltfließeigenschaften von Brennstoffölen und/oder zum Verbessern der Filtrierbarkeit von Brennstoffölen, die Kaltfließverbesserer-Zusatzstoffe umfassen.

18. Brennstofföl, umfassend 10 bis 5000 ppm nach Gewicht an wenigstens eine Zusammensetzung gemäß einem der Ansprüche 1 bis 15 und zusätzlich gegebenenfalls weitere Zusatzstoffe ausgewählt aus der Gruppe bestehend aus Kaltfließverbesserern, Paraffin-Dispergiermitteln, Leitfähigkeitsverbesserern, Antikorrosionszusatzstoffen, Schmiermittelzusatzstoffen, Antioxidationsmitteln, Metalldeaktivatoren, Antischaummitteln, Demulgatoren, Detergenzien, Cetanzahlverbesserern, Lösungsmitteln oder Verdünnungsmitteln, Farbstoffen und Duftstoffen.

19. Brennstofföl gemäß Anspruch 18, wobei der Brennstoff ein Dieselkraftstoff (ohne Zusatzstoffe) mit einem CP-Wert gemäß ASTM D2500/ASTM D97 von 0 bis -15 °C und/oder mit einem Gehalt an Paraffinen von 10 bis 27 Gew.-% ist.

## Revendications

1. Composition pour la réduction de la cristallisation de cristaux de paraffine dans des carburants comprenant
(I) un copolymère pouvant être obtenu par copolymérisation de
(A) au moins un acide dicarboxylique insaturé ou des dérivés correspondants,
les dérivés étant choisis dans le groupe constitué par
- des anhydrides,
- des esters de monoalkyle ou de dialkyle,
- des esters mixtes, et
- des monoamides et diamides, et des imides, d'acides dicarboxyliques insaturés,
(B) au moins une α-oléfine ayant d'au moins 6 jusqu'à 20 atomes de carbone inclus,
(C) éventuellement au moins un ester d'alkyle en C₃₋₂₀ d'acide acrylique ou d'acide méthacrylique ou un mélange de tels esters d'alkyle et
(D) éventuellement un ou plusieurs monomères copolymérisables supplémentaires autres que les monomères (A), (B) et (C),
suivie par la réaction avec au moins une dialkylamine (E), où les deux radicaux alkyles dans l'au moins une dialkylamine (E) sont indépendamment des radicaux alkyle ayant au moins 17 jusqu'à 30 atomes de carbone
et
(II) au moins un agent antistatique, choisi dans le groupe constitué par
(F) des copolymères de dioxyde de soufre avec une ou plusieurs 1-oléfines linéaires ou ramifiées ayant de 2 à 24 atomes de carbone
(F1) au moins un autre composant comprenant un ou plusieurs atomes d'azote basique et ayant au moins un radical hydrocarboné linéaire ou ramifié à chaîne relativement longue ayant au moins quatre atomes de carbone ou un élément structural équivalent qui garantit la solubilité du composant (F) dans le carburant,
le composant (F1) étant un produit de réaction d'oligoéthylèneamines ou d'oligoéthylèneimines avec des copolymères d'oléfine-anhydride maléique dérivatisés avec des amines ou des polyamines,
(G) des acides sulfoniques organiques qui possèdent un radical hydrocarbyle ayant de 6 à 40 atomes de carbone, et
(H) des composants à azote quaternaire de la formule
⁺NR¹R²R³R⁴ **A⁻**
dans laquelle
A⁻ représente un anion, préférablement un carboxylate **R⁵COO⁻** ou un carbonate **R⁵O-COO⁻,**
et
R¹, R², R³, R⁴, et R⁵, indépendamment les uns des autres, sont un radical organique comportant de 1 à 100 atomes de carbone, substitué ou non substitué, préférablement non substitué, un radical alkyle, alcényle ou hydroxyalkyle linéaire ou ramifié comportant 1 à 100, plus préférablement 1 à 75, encore plus préférablement 1 à 30, le plus préférablement 1 à 25 et notamment 1 à 20 atomes de carbone,
R⁵, de plus, peut être des radicaux cycloalkyle ou aryle substitués ou non substitués portant 5 à 20, préférablement 5 à 12 atomes de carbone,
le rapport en poids de copolymères (I) et d'agent antistatique (II) étant de 1 : 0,01 à 10, préférablement de 1 : 0,02 à 5, plus préférablement de 1 : 0,05 à 3.

2. Composition selon la revendication 1, le monomère (A) étant choisi dans le groupe constitué par l'acide maléique, l'acide fumarique, l'acide 2-méthylmaléique, l'acide 2,3-diméthylmaléique, l'acide 2-méthylfumarique, l'acide 2,3-diméthylfumarique, l'acide méthylènemalonique et l'acide tétrahydrophtalique et des dérivés correspondants.

3. Composition selon la revendication 1 ou 2, le monomère (B) étant choisi dans le groupe constitué par 1-hexène, 1-heptène, 1-octène, 1-nonène, 1-décène, 1-undécène, 1-dodécène, 1-tridécène, 1-tétradécène, 1-pentadécène, 1-hexadécène, 1-heptadécène, 1-octadécène, 1-nonadécène et 1-eicosène.

4. Composition selon l'une quelconque des revendications précédentes, le monomère (C) étant présent et choisi dans le groupe constitué par des esters d'acide acrylique et d'acide méthacrylique avec le n-propanol, l'isopropanol, le n-butanol, le sec-butanol, l'isobutanol, le tert-butanol, le n-pentanol, le tert-pentanol, le n-hexanol, le n-heptanol, le n-octanol, le 2-éthylhexanol, le n-nonanol, l'isononanol, le n-décanol, le 2-propylheptanol, le n-undécanol, l'isoundécanol, le n-dodécanol, le n-tridécanol, l'isotridécanol, le 3,3,5,5,7-pentaméthyloctanol, le n-tétradécanol, le n-pentadécanol, le n-hexadécanol, le n-heptadécanol, l'isoheptadécanol, le 3,3,5,5,7,7,9-heptaméthyldécanol, le n-octadécanol et le n-éicosanol.

5. Composition selon l'une quelconque des revendications précédentes, le monomère (D) étant présent et choisi dans le groupe constitué par des (méth)acrylates cycloaliphatiques (D1), des (méth)acrylates d'éthers de monoalkyle de polyalkylèneglycol (D2), des alcanoates de vinyle (D3), des composés allyliques (D4), des éthers de vinyle (D5), des vinyllactames (D6), des N-vinylimidazoles (D7), des composés aromatiques éthyléniquement insaturés (D8), le dioxyde de soufre (D9), des nitriles éthyléniquement insaturés (D10) et des esters d'acide acrylique ou d'acide méthacrylique qui portent au moins un système cyclique aromatique (D11).

6. Composition selon l'une quelconque des revendications 1 à 3, le monomère (A) étant l'anhydride maléique et ni le monomère (C) ni le monomère (D) n'étant présents dans le copolymère.

7. Composition selon l'une quelconque des revendications précédentes, la dialkylamine (E) étant la di-n-octadécylamine, la di-n-nonadécylamine ou la di-n-éicosylamine.

8. Composition selon l'une quelconque des revendications précédentes, le rapport molaire de dialkylamine (E) sur la base de motifs incorporés de l'acide dicarboxylique (A) dans le copolymère étant d'au moins 1,2 : 1 et jusqu'à 2,0 : 1.

9. Composition selon l'une quelconque des revendications précédentes, le composant (F) étant un copolymère de dioxyde de soufre avec une ou plusieurs 1-oléfines linéaires ou ramifiées ayant de 2 à 24 atomes de carbone.

10. Composition selon l'une quelconque des revendications précédentes, le composant (F1) pouvant être obtenu par polymérisation par voie radicalaire libre d'une ou plusieurs α-oléfines linéaires ou ramifiées ayant de 6 à 50 atomes de carbone avec l'anhydride maléique et réaction subséquente avec une ou plusieurs polyamines aliphatiques.

11. Composition selon l'une quelconque des revendications précédentes, le composant (G) étant un acide sulfonique organique qui possède un radical hydrocarbyle, préférablement un radical aromatique ou aromatique substitué de manière aliphatique, ayant de 6 à 40 atomes de carbone.

12. Composition selon l'une quelconque des revendications précédentes, le composant (H) étant un composé azoté quaternisé en la présence d'un acide ou d'une manière sans acide.

13. Composition selon l'une quelconque des revendications précédentes, l'agent antistatique (II) étant un mélange de
(F) au moins un copolymère de dioxyde de soufre avec une ou plusieurs 1-oléfines linéaires ou ramifiées ayant de 2 à 24 atomes de carbone et
(G) au moins un acide sulfonique organique qui possède un radical hydrocarbyle ayant de 6 à 40 atomes de carbone.

14. Composition selon l'une quelconque des revendications 1 à 12, l'agent antistatique (II) étant un mélange de
(F) au moins un copolymère de dioxyde de soufre avec une ou plusieurs 1-oléfines linéaires ou ramifiées ayant de 2 à 24 atomes de carbone, et
(F1) au moins un autre composant comprenant un ou plusieurs atomes d'azote basique et ayant au moins un radical hydrocarboné linéaire ou ramifié à chaîne relativement longue ayant au moins quatre atomes de carbone ou un élément structural équivalent qui garantit la solubilité du composant (F) dans le carburant,
le composant (F1) étant un produit de réaction d'oligoéthylèneamines ou d'oligoéthylèneimines avec des copolymères d'oléfine-anhydride maléique dérivatisés avec des amines ou des polyamines, et
(G) au moins un acide sulfonique organique qui possède un radical hydrocarbyle ayant de 6 à 40 atomes de carbone.

15. Composition selon l'une quelconque des revendications 1 à 12, l'agent antistatique (II) étant (H) au moins un composant azoté quaternaire.

16. Utilisation de la composition selon l'une quelconque des revendications 1 à 15 pour la réduction de la cristallisation de cristaux de paraffine dans des carburants.

17. Utilisation de la composition selon l'une quelconque des revendications 1 à 15 pour l'amélioration des propriétés d'écoulement à froid de fiouls et/ou pour l'amélioration de la filtrabilité de fiouls comprenant des additifs améliorant l'écoulement à froid.

18. Fioul comprenant 10 à 5 000 ppm en poids d'au moins une composition selon l'une des revendications 1 à 15 et de plus éventuellement en outre des additifs choisis dans le groupe constitué par des agents d'amélioration de l'écoulement à froid, des dispersants de paraffine, des agents d'amélioration de la conductivité, des additifs anticorrosion, des additifs lubrifiants, des antioxydants, des agents de désactivation de métal, des agents antimousses, des désémulsifiants, des détergents, des agents d'amélioration de l'indice de cétane, des solvants ou des diluants, des colorants et des fragrances.

19. Fioul selon la revendication 18, le carburant étant un carburant diesel (sans aucun additif) doté d'une valeur CP selon la norme ASTM D2500/ASTM D97 de 0 à -15 °C et/ou doté d'une teneur en paraffines allant de 10 à 27 % en poids.
